# EUROPÄISCHE PATENTSCHRIFT

(11) **EP 1 478 528 B1**
(45) Veröffentlichungstag und Bekanntmachung des Hinweises auf die Patenterteilung: **11.01.2006**
(21) Anmeldenummer: 03742875.2
(22) Anmeldetag: 27.02.2003
(51) Int. Cl.: B60D 1/54

(54) **SCHWENKBARE ANHÄNGEVORRICHTUNG FÜR ZUGFAHRZEUGE**
PIVOTABLE TOWING DEVICE FOR TOWING VEHICLES
DISPOSITIF DE REMORQUAGE PIVOTANT POUR VEHICULES DE TRACTION

(30) Priorität: 28.02.2002 DE 20203270 U; 09.10.2002 DE 20215508 U
(43) Veröffentlichungstag der Anmeldung: 24.11.2004
(73) Patentinhaber: AL-KO KOBER AG, D-89359 Kötz (DE)
(72) Erfinder: RAMPP, Armin, 86513 Ursberg/Bayersried (DE)
(74) Vertreter: Ernicke, Klaus Stefan
(86) Internationale Anmeldenummer: PCT/EP2003/002008
(87) Internationale Veröffentlichungsnummer: WO 2003/072375

(56) Entgegenhaltungen:
- EP-A- 1 009 088
- EP-A- 1 225 067
- DE-A- 10 004 523
- DE-A- 10 023 640
- DE-A- 10 104 186
- US-A- 4 499 790
- US-A- 5 584 621

## Beschreibung

Die Erfindung betrifft eine schwenkbare Anhängevorrichtung für Zugfahrzeuge mit den Merkmalen im Oberbegriff des Hauptanspruchs.

Eine solche schwenkbare Anhängevorrichtung ist aus der DE-A 100 23 640 bekannt. Sie besteht aus einer gekrümmten Zugstange, die um zwei rotatorische Achsen beweglich gelagert ist und von einem motorischen Antrieb zwischen einer ausgefahrenen Betriebsstellung und einer eingefahrenen Ruhestellung hin- und hergeschwenkt wird. Die beiden rotatorischen Achsen werden hierbei nacheinander betätigt, wobei der translatorisch arbeitende Antrieb die Zugstange zum Einschwenken aus der Betriebsstellung zunächst mittels eines Exzenterhebels um eine längs des hinteren Stangenendes verlaufende Drehachse um 90° dreht. Bei dieser Drehbewegung ist die Drehachse vertikal ausgerichtet, wobei die Zugstange bei der Drehbewegung durch einen hierfür notwendigen Ausschnitt im sichtbaren Bereich der Heckschürze des Zugfahrzeugs bewegt wird. Durch die eingeschränkte Kinematik kann die Zugstange sich nicht unten um den Rand der Heckschürze oder des Stoßfängers herumbewegen und braucht den optisch nachteiligen Ausschnitt, der mit einem Deckel verschlossen werden muss. Sobald die Drehbewegung beendet ist, erfolgt eine Schwenkbewegung der nun quer stehenden Zugstange um eine längs der Fahrzeuglängsrichtung ausgerichtete Kippachse, wodurch die Zugstange hinter der Heckschürze verschwindet und von außen nicht mehr sichtbar ist. Diese Anhängevorrichtung ist kompliziert aufgebaut und bedarf einer aufwendigen Steuerung bzw. Stangenführung zum Einhalten der benötigten Bewegungsabfolge beim Drehen und Kippen. Die Kippbewegung darf erst nach Abschluss der Drehbewegung beginnen, weil sonst die Zugstange an der Heckschürze anstoßen und diese beschädigen würde.

Eine andere zweiachsig schwenkbare Anhängevorrichtung ist aus der DE 195 21 896 A1 bekannt. Die Zugstange ist um zwei rotatorische, nacheinander betätigbare Achsen schwenkbar gelagert und wird von einem mechanischen Antrieb zwischen einer ausgefahrenen Betriebsstellung und eingefahrenen Ruhestellung am Zugfahrzeug bewegt. Hierbei wird die Zugstange aus der Betriebsstellung mittels filigranen Hubspangen abgeschwenkt und anschließend um 90° hinter die Heckschürze des Fahrzeugs gedreht. In der Ruhestellung ist die Zugstange von außen sichtbar.

Aus der EP-A-0 799 732 ist eine andere Anhängekupplung bekannt, welche nur eine einzige schräg ausgerichtete Schwenkachse für die Bewegung der Zugstange aufweist. Diese Anordnung erfordert wegen der räumlich schräg liegenden Schwenkachse einen großen Bauraum. Außerdem benötigt die Zugstange durch die einachsige Schwenkbewegung auch viel freien Bewegungsraum. Beides ist bei vielen Fahrzeugen nicht vorhanden. Der Einsatzbereich ist dadurch eingeschränkt.

Aus der DE-A-197 11 535 ist eine weitere Anhängevorrichtung bekannt, bei der die Zugstange ebenfalls zweiachsig beweglich ist, wobei hier eine translatorische Achse und eine Schwenkachse zusammenwirken. Der Antrieb erzeugt aus der Ruhestellung eine translatorische Ausfahrbewegung, wobei am Ende der Bewegung mittels einer schraubenartigen Kulisse die Zugstange um 90° aus ihrer anfangs quer liegenden in die stehende Position gebracht wird, welche in der ausgefahrenen Betriebsstellung benötigt wird. Diese Anordnung erlaubt es nur, die Zugstange linear einzuziehen und aus ihrer in Betriebsstellung nach hinten vom Fahrzeugheck abstehenden Lage in eine Position unter der Heckschürze zu bringen. Hierbei ist es allerdings nicht möglich, die Zugstange in der Ruhestellung hinter der Heckschürze verschwinden zu lassen und unsichtbar zu machen.

Es ist Aufgabe der vorliegenden Erfindung, eine bessere schwenkbare Anhängevorrichtung aufzuzeigen.

Die Erfindung löst diese Aufgabe mit den Merkmalen im Hauptanspruch.
Die erfindungsgemäße schwenkbare Anhängevorrichtung hat den Vorteil, dass die Zugstange aus der Betriebsstellung in eine Ruheposition gebracht werden kann, in der sie hinter der Heckschürze verschwindet und nicht mehr sichtbar ist. Durch die überlagerte Rotationsbewegung ist der benötigte Freiraum für die Zugstangenbewegung sehr klein. Außerdem sind keinerlei sichtbare Aussparungen oder sonstige Gestaltungsänderungen an der Heckpartie des Zugfahrzeugs, insbesondere an der Heckschürze erforderlich. Die Zugstange kann in einer räumlich gekrümmten Bahn kollisionsfrei um die Unterkante der Heckschürze oder des dortigen Stoßfängers herumgeschwenkt werden.

Die Anhängevorrichtung baut mit ihrer Mechanik außerdem sehr klein und findet auch bei beengten Raumverhältnissen im Fahrzeugheck Platz. Besonders die Bautiefe in Fahrzeuglängsrichtung ist gering und liegt im Bereich 80 mm und weniger. Die Anhängevorrichtung hat den weiteren Vorteil, dass sich die Bewegungen exakt steuern lassen. Zudem kann die Anhängevorrichtung mit einem einzigen mechanischen Antrieb, z.B. einem Antriebsmotor oder einem manuellen Kurbelantrieb oder dgl., auskommen. Dies verringert den Bau- und Kostenaufwand.

Vorteilhafterweise kann hierbei auch der Steckdosenhalter mit der Zugstange verbunden und mit bewegt werden. Er ist dadurch in der Ruheposition ebenfalls nicht sichtbar.

Alternativ kann ein mit der Zugstange verbundener Stromübertrager eingesetzt werden.

Die überlagerte Rotationsbewegung um die zwei Achsen wird vorzugsweise über ein Getriebe realisiert. Hierbei lässt sich der Antriebsmotor mit der Zugstange verbinden und mit bewegen. Dies hat den Vorteil, dass der Bauraum noch weiter verringert werden kann. Außerdem lässt sich die Zugstange in der Ruheposition in einem Freiraum im Querträger des Zugfahrzeugs unterbringen, wo sie auch besonders gut geschützt ist.

Zur Erzeugung der zwei überlagerten Rotationsbewegungen kann das Getriebe zwei miteinander gekoppelte Getriebeteile haben. Diese lassen sich unterschiedlich auslegen, wodurch die Anhängervorrichtung in weiten Grenzen an die gegebenen Raumverhältnisse und an unterschiedliche Fahrzeuge anpassen lässt. Die vorbekannten Anhängevorrichtungen bieten diese Flexibilität nicht.

Die Anhängevorrichtung hat ferner den Vorteil, dass sie sich sehr gut gegen Umgebungseinflüsse von außen abdichten lässt. Zum einen umgibt das Gehäuse wasser- und staubdicht den Antrieb, das Getriebe und das Drehlager für die Zugstange. Ferner kann eine Dichtung vorhanden sein, die den Freiraum im Querträger und/oder die Hecköffnung an der Unterseite des Fahrzeughecks dicht verschließt. Diese Abdichtung kann im einfachsten Fall als Lippendichtung, alternativ aber auch als bewegliches und steuerbares Dichtungsteil ausgebildet sein, dessen Bewegung vom Antrieb oder von der Schwenkbewegung der Zugstange abgeleitet wird.

Die Anhängevorrichtung kann ferner eine Verriegelungsvorrichtung besitzen, mit der die Zugstange zumindest in der ausgefahrenen Betriebsstellung, vorzugsweise auch in der eingezogenen Ruheposition fixieren lässt. Die Verriegelungsvorrichtung wird automatisch beim Ein- und Ausfahren der Zugstange betätigt bzw. gelöst.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1 bis 4:: eine Anhängevorrichtung mit Teilen des Fahrzeughecks in verschiedenen Bewegungsstadien zwischen der ausgefahrenen Betriebsstellung und der eingezogenen Ruhestellung in aufgebrochener Seitenansicht,
- Figur 5 bis 8:: die Anhängevorrichtungen mit den verschiedenen Bewegungsstellungen von Figur 1 bis 4 aus der Heckansicht in vereinfachter Darstellung,
- Figur 9 bis 11:: die Anhängevorrichtungen in drei verschiedenen Bewegungsstellungen von Figur 5 bis 8 aus der Heckansicht in stärker detaillierter Darstellung,
- Figur 12:: eine perspektivische und aufgebrochene Ansicht einer ersten Variante des Antriebs der Anhängevorrichtung,
- Figur 13:: eine perspektivische Detaildarstellung des Antriebs von Figur 12,
- Figur 15:: eine teilweise aufgebrochene perspektivische Darstellung einer zweiten Variante des Antriebs der Anhängevorrichtung in der Einbausituation am Fahrzeugheck,
- Figur 16:: eine noch stärker aufgebrochene Darstellung der Anhängevorrichtung gemäß Figur 15,
- Figur 17:: eine andere aufgebrochene perspektivische Detailansicht der Anhängevorrichtung gemäß Figur 16,
- Figur 18 und 19:: zwei weitere noch stärker aufgebrochene und abstrahierte perspektivische Darstellungen der Anhängevorrichtung von Figur 15 bis 17,
- Figur 20 bis 23:: aufgebrochene perspektivische Darstellungen einer dritten Variante des Antriebs der Anhängevorrichtung in verschiedenen Bewegungsstellungen,
- Figur 24:: eine vergrößerte perspektivische Detaildarstellung des Stangenendes in verriegelter Ruhestellung
- Figur 25:: eine vergrößerte perspektivische Detaildarstellung eines Zahnrings,
- Figur 26:: eine Seitenansicht der Zugstange von Figur 20 bis 24 mit Stromübertrager,
- Figur 27:: eine perspektivische Seitenansicht des Gehäuses zur Antriebsvariante von Figur 20 bis 24 und
- Figur 28 bis 29:: teilweise aufgebrochene perspektivische Darstellungen des Antriebs in der Zusammenbausituation.

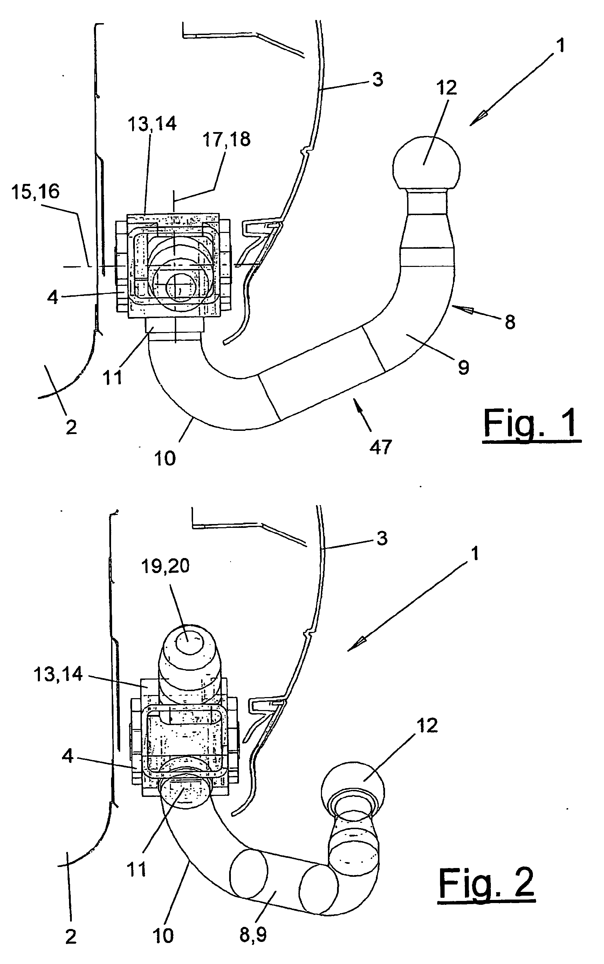

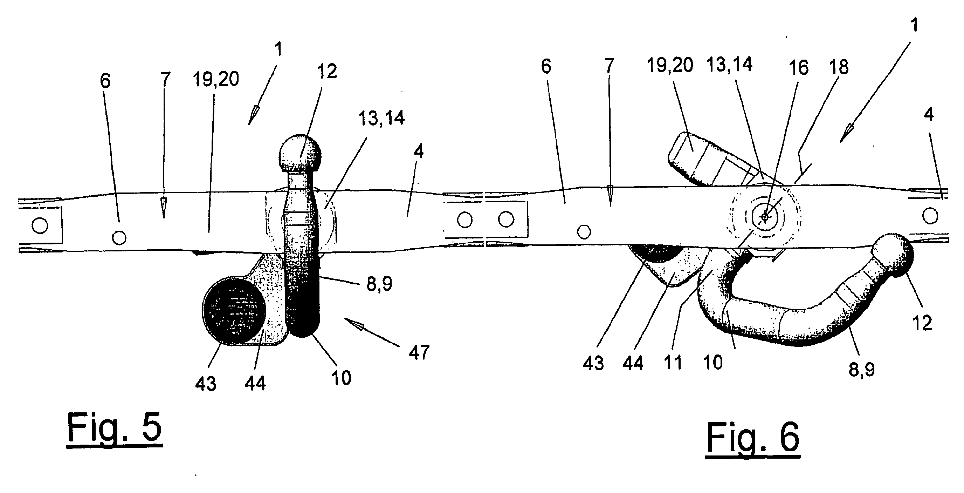

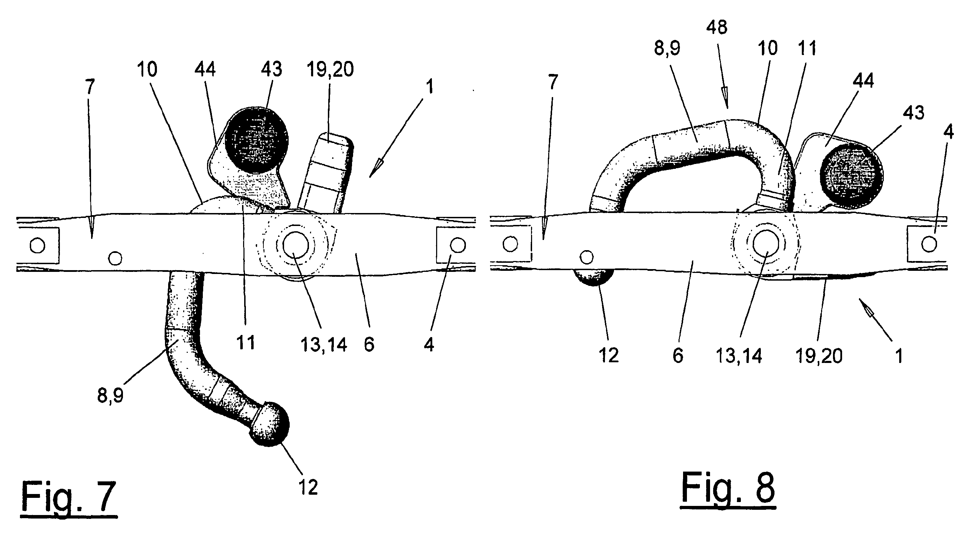

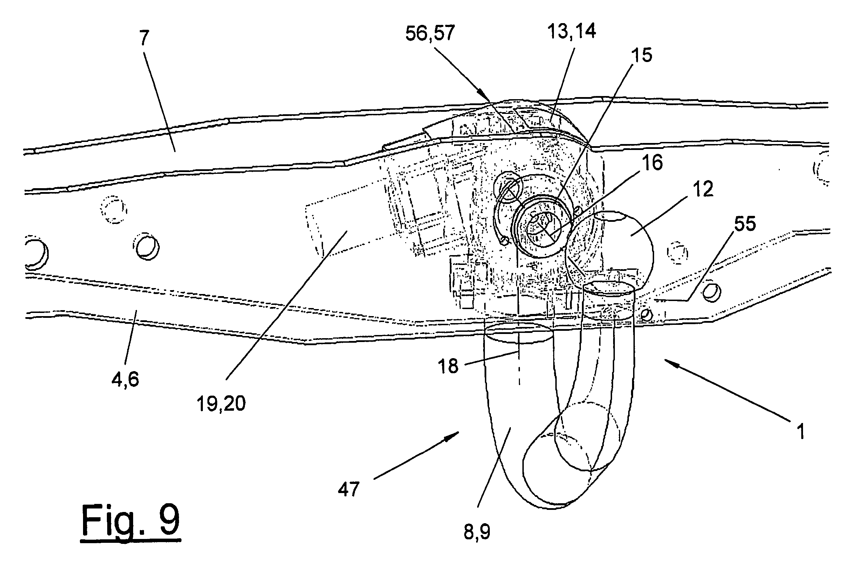

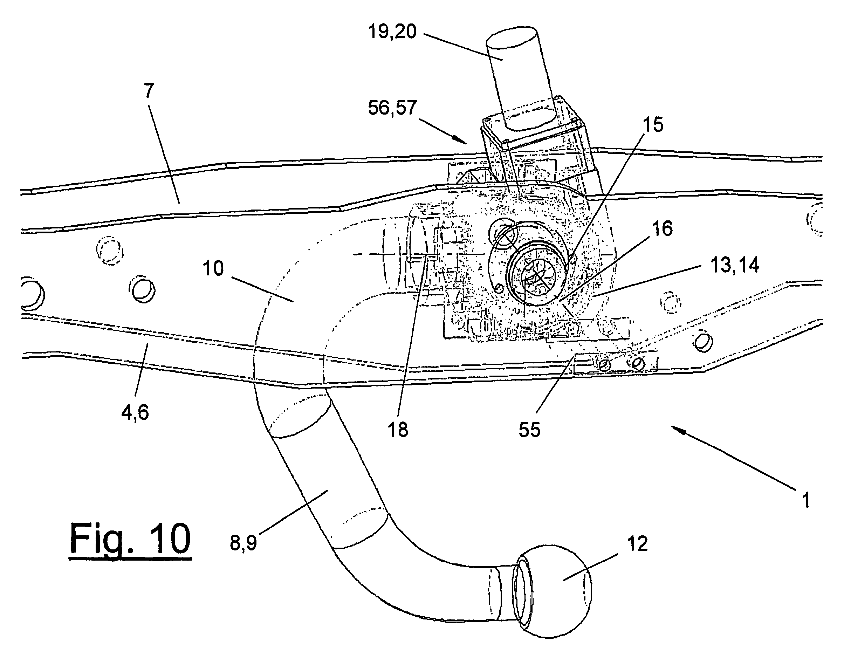

Figur 1 bis 4 zeigen eine Anhängevorrichtung (1) am Heck (3) eines Zugfahrzeugs (2) in aufgebrochener Seitenansicht und in verschiedenen Bewegungsstellungen. Figur 5 bis 8 zeigen hierzu die entsprechenden Bewegungsstellungen in vereinfachter Darstellung und Heckansicht von hinten. Figur 9 bis 11 zeigen stärker detaillierte Heckansichten und Bewegungsstellungen.

Die Anhängevorrichtung (1) ist dem Zugfahrzeug (2) zugeordnet und ist in einem Hohlraum des Fahrzeughecks (3) verborgen untergebracht, welcher an der Unterseite eine Hecköffnung (52) besitzt. Die Anhängevorrichtung (1) hat eine vorzugsweise zweifach oder im Wesentlichen U-förmig gekrümmte Zugstange (8), die am freien hoch ragenden Ende des Stangenhalses (9) einen geeigneten Zugkopf (12), z.B. einen üblichen Kugelkopf trägt. Die Zugstange (8) besteht vorzugsweise aus Metall, z.B. Stahl oder Leichtmetall. Der Stangenhals (9) geht nach einer ersten Krümmung (10) in einen schräg nach hinten abfallenden geraden Abschnitt und dann über eine weitere Krümmung (10) in ein weiteres gerades und senkrecht stehendes Stangenende (11) über.

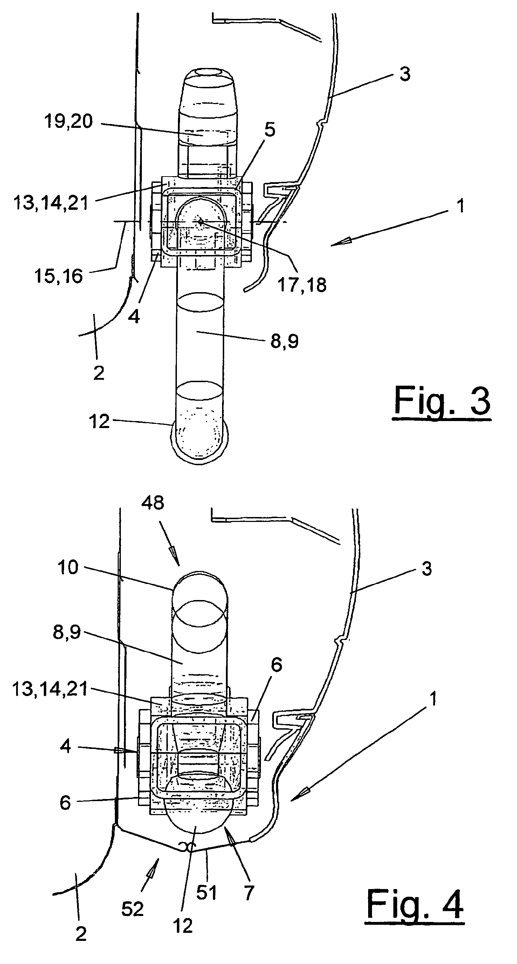

Figur 1, 5 und 9 zeigen hierzu die Betriebsstellung (47), in der die ausgefahrene Zugstange (8) die vorbeschriebenen Stellungen und Ausrichtungen einnimmt und mit ihrem Kugelkopf (12) ankuppelbereit mit Abstand vor der Heckschürze (3) positioniert ist. Figur 4, 8 und 11 zeigen die eingefahrene Ruhestellung (48) der Zugstange (8).

Die Kugelstange (8) ist mindestens zweiachsig und vorzugsweise kardanisch gelagert und wird durch einen mechanischen und vorzugsweise motorisierten Antrieb (13) bewegt. Der Antriebsmotor (20) ist vorzugsweise als Elektromotor, insbesondere als Getriebemotor ausgebildet. Er wird über einen geeigneten Kabelschlepp von der Stromversorgung des Zugfahrzeugs (2) mit Betriebsspannung und Steuersignalen versorgt. Die Anhängevorrichtung (1) besitzt ferner eine nicht dargestellte Steuerung, die mit entsprechenden Bedienelementen für die Positionierung im Zugfahrzeug (2) ausgerüstet oder solchen ggf. fahrzeugseitig bereits vorhandenen Bedienelementen verbunden ist. Die Anhängevorrichtung (1) kann hierdurch zwischen ihren Endlagen (47,48) hin- und herbewegt werden, wobei Kontrollleuchten oder dergleichen die korrekte Funktion oder auch Fehlfunktionen anzeigen. Die Steuerung kann vom Fahrzeuginnenraum, alternativ aber auch von außen über eine vorzugsweise drahtlose Fernbedienung per Funk, Infrarot oder dgl. betätigt werden.

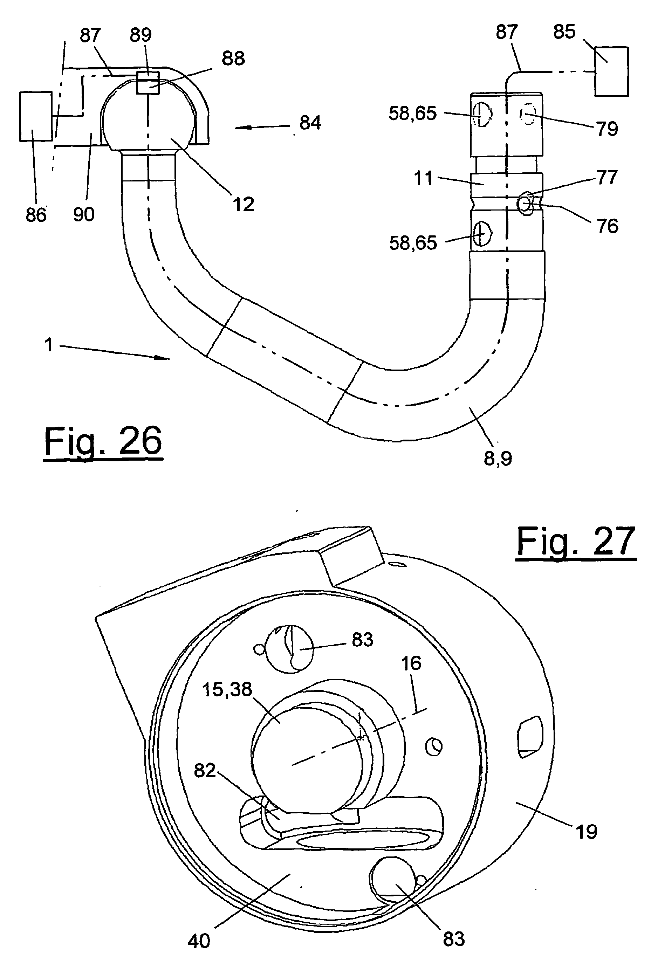

Der Kabelschlepp kann außerdem mit einer elektrischen Steckdose (43) für die Stromversorgung eines Anhängers verbunden sein und ihr die erforderliche Betriebsspannung und Signal- oder Steuerspannungen zuleiten. Die Steckdose (43) ist der Zugstange (8) zugeordnet und kann mit dieser bewegt werden. Über die zentrale Steuerung der Anhängevorrichtung (1) können hierbei die genannten Ströme oder Spannungen an der Steckdose (43) in Ruhestellung (48) abgeschaltet und in Betriebsstellung (47) aufgeschaltet werden. Figur 26 zeigt hierzu eine nachfolgend beschriebene Variante mit einem Stromübertrager (84).

Die Anhängevorrichtung (1) besitzt ferner eine Verriegelungsvorrichtung (56), mit der die Zugstange (8) in mindestens einer ihrer Endstellungen, vorzugsweise in beiden Endstellungen (47,48) durch Riegelelemente (58,59,78) formschlüssig verriegelt und festgehalten werden kann. Der Antrieb (13) wird hierdurch entlastet.

Das rückwärtige Stangenende (11) ist mittels eines Drehlagers (17) in einem Gehäuse (19) um eine zentrale Drehachse (18) drehbar gelagert. Das Gehäuse (19) ist seinerseits über eine quer zur Drehachse (18) liegende Schwenkachse (16) und ein zugehöriges Schwenklager (15) an einem Querträger (4) im Heckbereich (3) des Zugfahrzeugs (2) gelagert. Die rotatorischen Achsen (16,18) sind vorzugsweise in der Art einer kardanischen Lagerung rechtwinklig zueinander ausgerichtet und schneiden sich.

Die Schwenkachse (16) erstreckt sich vorzugsweise entlang der Längsachse des Zugfahrzeugs. Der Querträger (4) kann Bestandteil der Anhängevorrichtung (1) sein. Er kann aber auch bauseits am Zugfahrzeug vorhanden sein. Am Gehäuse (19) ist die Steckdose (43) vorzugsweise mit einem platten- oder stegförmigen Steckdosenhalter (44) befestigt.

Wie Figur 1 bis 11 verdeutlichen, kann die Zugstange (8) dank der kardanischen Lagerung aus der in Figur 1, 5 und 9 dargestellten ausgefahrenen Betriebsstellung (47) in eine in Figur 4, 8 und 11 dargestellte zurückgezogene Ruhestellung (48) bewegt werden. Figur 2, 3, 6, 7 und 10 zeigen die dabei eingenommenen Zwischenstellungen. Die Zugstange (8) führt hierbei eine überlagerte und zumindest bereichsweise gleichzeitige Rotationsbewegung um beide rotatorischen Achsen (16,18) aus. Die Zugstange (8) dreht um ihre Drehachse (18) am Stangenende (11) um vorzugsweise 90°, wobei sie über die Schwenkbewegung des Gehäuses (19) um einen größeren Winkel von z.B. 180° bis 190° um die Schwenkachse (16) bewegt wird.

Hierbei bewegt sich die zweifach gekrümmte Zugstange (8) mit ihrem Kugelkopf (12) in einer wenig ausladenden Bahn unter dem unteren Ende der Heckschürze (3) hindurch und kann dann am Ende in den Hohlraum (7) hinter Heckschürze (3) eintauchen. In der Ruhestellung (48) ist in dieser bevorzugten Ausführungsform von der Zugstange (8) und der mitbewegten Steckdose (43) von außen nichts mehr zu sehen. Die Teile sind vollständig hinter der Heckschürze (3) verborgen. Hierbei nimmt die Zugstange (8) in der Ruhestellung (48) eine quer zur Fahrzeuglängsachse ausgerichtete Stellung ein, in der sie mit ihren Krümmungen (10) nach oben weist.

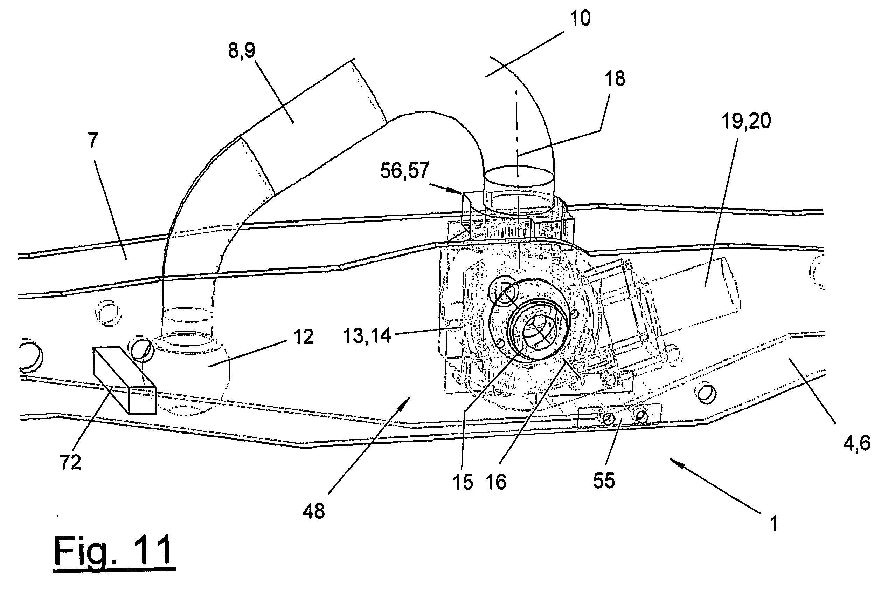

In den beiden Endstellungen (47,48) können die Schwenkbewegungen der Zugstange (8) durch relativ ortsfeste Anschläge (55,72) am Querträger (4) begrenzt werden. Für die ausgefahrene Betriebsstellung (47) ist ein Anschlag (55) wirksam, an dem die Zugstange (8) mit einem unterhalb des Gehäuses (19) angeordneten Ansatz an einem Stangenbund (36) anschlägt. In der Ruhestellung (48) kommt der Kugelkopf (12) an einem quer liegenden Anschlag (72) zur Anlage. Figur 11 zeigt beide Anschläge (55,72).

Wie Figur 4 verdeutlicht, besitzt die Anhängevorrichtung (1) mindestens eine Dichtung (51), die an der Unterseite des Querträgers (4) und/oder an der Heckschürze (3) angeordnet ist. Die Dichtung (51) kann den nachfolgend näher erläuterten Freiraum (7) zumindest in der Ruhestellung (48) der Zugstange (8) nach unten verschließen. Sie kann z.B. aus einer Lippendichtung oder aus einem mit der Zugstange (8) verbundenen und an der Hecköffnung hin und her beweglichen Schieber oder dergleichen anderer Konstruktion bestehen. Hierdurch sind einerseits die Komponenten der Anhängevorrichtung (1) geschützt im Hohlraum des Fahrzeughecks (3) untergebracht, wobei andererseits auf Schutzkappen oder sonstige Abdeckungen des Kugelkopfes (12) verzichtet werden kann. Die geschützte Anordnung ist auch für den Stromübertrager (84) vorteilhaft.

Der mechanische Antrieb (13) besitzt eine Einrichtung (14) zur Erzeugung der überlagerten Rotationsbewegung der Zugstange (8) um die beiden rotatorischen Achsen (16,18). Die Einrichtung (14) ist vorzugsweise als mehrteiliges Getriebe (21) ausgebildet, welches aus einem Schwenkgetriebe (22) und einem Drehgetriebe (23) besteht.

Der Querträger (4) hat im vorzugsweise mittleren Bereich, wo üblicherweise die Anhängevorrichtung (1) am Zugfahrzeug (2) positioniert ist, einen längs gestreckten Freiraum (7), in den sich die Zugstange (8) mit dem Gehäuse (19) sowie der Steckdose bewegen kann, wobei das Gehäuse (19) an den den Freiraum (7) umgebenden Wänden schwenkbar gelagert sein kann. Der Querträger (4) besteht hierzu beispielsweise aus zwei quer zur Fahrzeuglängsachse ausgerichteten Tragrohren (5) oder anderen geeigneten Trägerelementen, die im Mittenbereich des Fahrzeugs unter Bildung des Freiraums (7) in Fahrzeuglängsrichtung voneinander seitlich distanziert sind. Der Freiraum (7) wird seitlich begrenzt durch zwei parallele Tragplatten (6), die endseitig an den beiden Tragrohren (5) befestigt, z.B. angeschweißt sind. Die Tragplatten (6) bilden in der Mitte jeweils ein Schwenklagerteil (39), welches z.B. als Lagerauge ausgebildet ist, indem die zweiten, mit dem Gehäuse (19) verbundenen zapfenartigen Schwenklagerteile (38) drehbar und gegebenenfalls in Verbindung mit der Verriegelungsvorrichtung (56) verschieblich gelagert und geführt ist.

In den gezeigten Ausführungsbeispielen ist der Antriebsmotor (20) mit der Zugstange (8) verbunden und am Gehäuse (19) angeordnet. Er wird bei den Stangen- und Gehäusebewegungen mitbewegt. Figur 1 bis 11 verdeutlichen diese Lageänderungen.

Die Einrichtung (14) zur Erzeugung der überlagerten Rotationsbewegungen ist vorzugsweise als das erwähnte zweiteilige Getriebe (21) ausgebildet, welches die rotatorischen Achsen (16,18) koppelt. Das eine Getriebeteil ist als Schwenkgetriebe (22) ausgebildet und wirkt auf die Schwenkachse (16) ein. Das andere Getriebeteil ist als Drehgetriebe (23) ausgebildet und wirkt auf die Drehachse (18) ein. Die Getriebeteile (22,23) sind bewegungsmäßig miteinander gekoppelt, wobei vorzugsweise die Drehbewegung um die Drehachse (18) von der in diesem Ausführungsbeispiel größeren Schwenkbewegung um die Schwenkachse (16) abgeleitet wird. Der Antriebsmotor (20) erzeugt hierbei in der nachfolgenden beschriebenen Weise zunächst die Schwenkbewegung des Gehäuses (19) mit der darin gelagerten Zugstange (8) um die Schwenkachse (16), von der dann die Drehbewegung der Zugstange (8) um die Drehachse (18) abgeleitet wird.

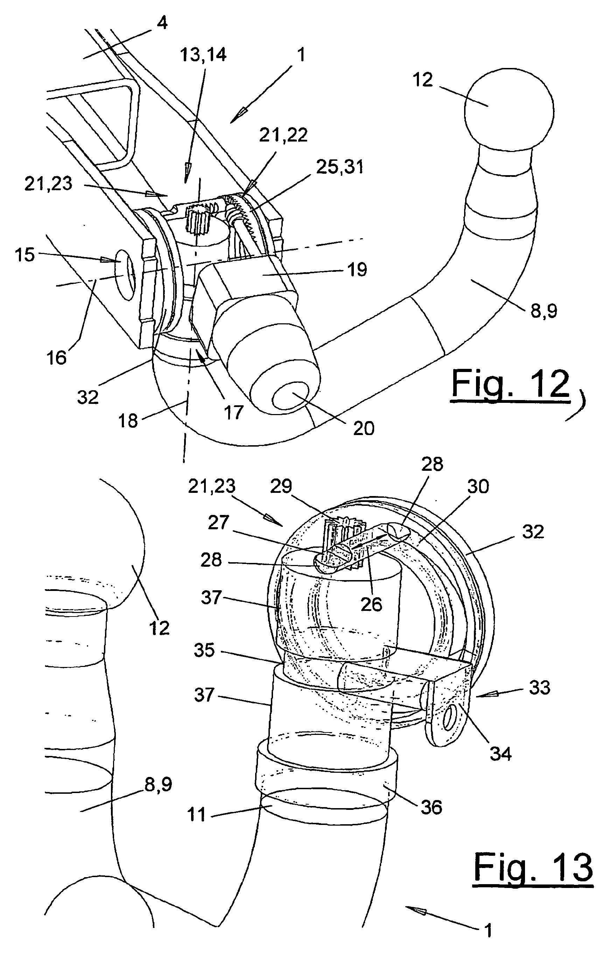

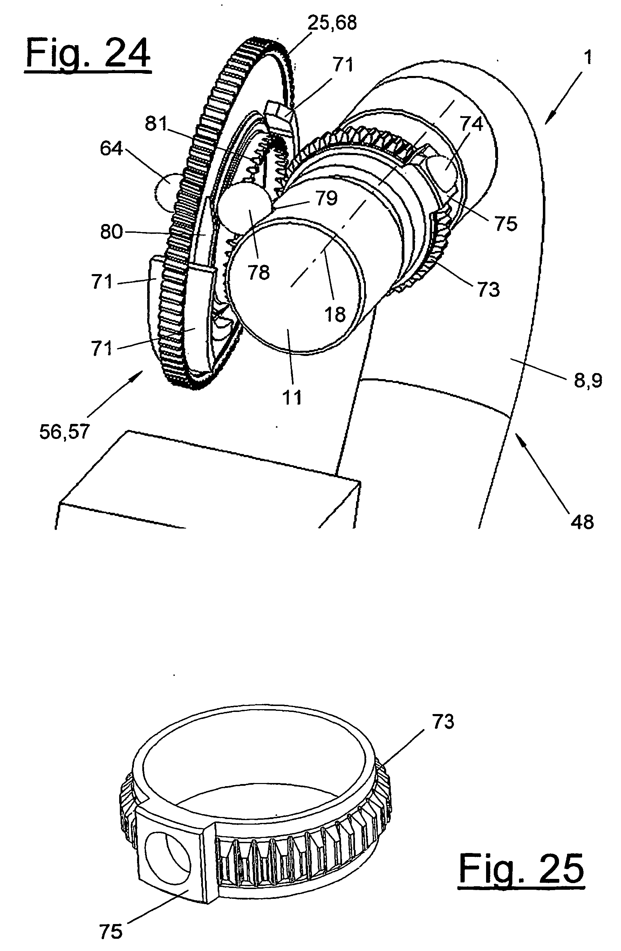

Für die Einrichtung (14) zur Erzeugung der überlagerten Rotationsbewegung gibt es mehrere Gestaltungsvarianten gemäß Figur 12 und 14, 15 bis 19 und 20 bis 29, die sich jeweils hinsichtlich der Ausbildung des Getriebes (21) unterscheiden.

Wie Figur 12 verdeutlicht, ist der rotatorisch treibende Antriebsmotor (20) in allen Varianten endseitig am Gehäuse (19) angeflanscht. Er ist mit einem Antriebselement (24) des Schwenkgetriebes (22) verbunden, welches z.B. als Schneckenwelle ausgebildet ist und mit einem relativ ortsfesten Abstützelement (25) in Eingriff steht. Dies ist z.B. ein in Figur 12, 16 und 20 dargestellter ringförmiger Zahnkranz (25), der über einen Stützring (31) stationär oder bei Existenz einer Verriegelungsvorrichtung (56) zeitweise stationär an der benachbarten Tragplatte (6) befestigt ist. Der Zahnkranz (25) und der kongruente Stützring (31) sind hierbei konzentrisch zur Schwenkachse (16) angeordnet und besitzen innenseitig eine kreisrunde Durchgangsöffnung für den Lagerzapfen (38) des Schwenklagers (15) am Gehäuse (19). Vorzugsweise ist der Zahnkranz (25) an der dem Fahrzeugheck (3) zugewandten Seite des Querträgers (4) angeordnet. Die Anordnung kann alternativ auch umgekehrt sein. Der Zahnkranz (25) und der Stützring (31) können miteinander verbunden und einteilig ausgebildet sein. Das tangential angestellte Schneckenrad kämmt mit dem nach innen gerichteten Zahnkranz (25). Durch eine Drehung der Schneckenwelle (24) bewegt sich der Antriebsmotor (20) mit dem angeflanschten Gehäuse (19) in der gewünschten Richtung um die Schwenkachse (16) nach links oder rechts.

Figur 12 bis 14 zeigen eine erste Variante der Einrichtung (14) zur Erzeugung der überlagerten Rotationsbewegung.

Im Gehäuse (19) ist das Drehgetriebe (23) angeordnet, welches aus einer senkrecht zur Schneckenwelle (24) und dabei längs der Schwenkachse (16) ausgerichteten quer beweglichen Zahnstange (26) und einem am Stangenende (11) befestigten Zahnrad (29) besteht. Die Zahnstange (26) ist an einer Längsseite mit einer Verzahnung versehen, die mit dem Zahnrad (29) kämmt. Die Zahnstange (26) ist im Gehäuse (19) quer beweglich geführt und verdrehfest gelagert. Sie wird bei der Schwenkbewegung des Gehäuses (19) mitsamt der Zugstange (8) mit bewegt und ist an ein oder beiden Zahnstangenenden (28) an ein oder zwei seitlichen stationären Kurvenbahnen (30) geführt. An den Zahnstangenenden (28) befinden sich ferner noch Führungen oder Abflachungen (27), die die Zahnstange (26) am Gehäuse (19) in Öffnungen (42) führen und eine unerwünschte Drehbewegung der Zahnstange (26) um ihre Längsachse verhindern sowie den Eingriff mit dem Zahnrad (29) sichern.

Vorzugsweise sind zwei gegenüber liegende und konzentrisch zur Schwenkachse (16) angeordnete Kurvenbahnen (30) vorhanden, die zueinander komplementäre Erhebungen und Absenkungen ihrer Kurvenbahn haben. Diese Höhen und Täler sind längs der Schwenkachse (16) ausgerichtet, so dass entsprechend der Drehstellung des Gehäuses (19) die Zahnstange (26) durch Führung entlang der Kurvenbahnen (30) entsprechend deren Höhenkontur nach links oder rechts quer verschoben wird. Die Querbewegungen der Zahnstange (26) werden auf das Zahnrad (29) übertragen und in eine Drehbewegung der Zugstange (8) um die bei der Gehäuseschwenkung mit bewegte Drehachse (18) umgesetzt. Durch die Formgestaltung der Kurvenbahnen (30) und ihrer Höhenkontur kann die Überlagerung der Schwenk- und Drehbewegung beeinflusst und variiert werden.

Sobald die Zugstange (8) um 90° gedreht ist und parallel zum Querträger (4) ausgerichtet ist, endet die Drehbewegung durch eine entsprechende Abflachung der Kurvenbahn (30), so dass der Antriebsmotor (20) nur noch eine weiterführende Schwenkbewegung des Gehäuses (19) mitsamt der Zugstange (8) bis in die Ruhestellung (48) bewirkt. Hierbei taucht die Zugstange (8) in den Freiraum (7) des Querträgers (4) ein und ist hierin geschützt untergebracht. Bei dieser Schwenkbewegung wird auch die Steckdose (43) durch den Freiraum (7) mit bewegt und verschwindet aus dem Sichtbereich am Fahrzeugheck (3).

Beim Ausfahren der Zugstange (8) aus der Ruhestellung (48) in die Betriebsstellung (47) finden die vorbeschriebenen Bewegungen in umgekehrter Reihenfolge statt. Der Antriebsmotor (20) schwenkt das Gehäuse (19) zurück, wobei die Zahnstange (26) zunächst durch eine gleichbleibende Höhenlage der Kurvenbahnen (30) nicht mit bewegt wird. Ab dem gewünschten Überlagerungspunkt beginnt dann über die Kurvenbahn (30) die translatorische Zahnstangenbewegung und die entsprechende Drehbewegung der Zugstange (8).

Die eingangs angesprochene kardanische Lagerung der Zugstange (8) besteht aus dem Schwenklager (15) des Gehäuses (19) und dem Drehlager (17) der Zugstange (8) im Gehäuse (19). Zur Bildung des Drehlagers (17) hat das Stangenende (11) zwei durch eine Sicherungsnut (35) axial voneinander abgesetzte Drehlagerflächen (37), die mit entsprechenden Gegenlagerflächen im Inneren des Gehäuses (19) (nicht dargestellt) zusammenwirken. Das Drehlager (17) muss die auf den Anhänger einwirkenden Zugkräfte abstützen und ist entsprechend stabil ausgebildet. Es kann ein Gleitlager oder ein Wälzlager beinhalten.

Für die Lagesicherung des Stangenendes (11) ist eine Axialsicherung (33) vorgesehen. Sie besteht aus einem im Gehäuse (19) quer verschieblich geführten Sicherungsbügel (34), der innenseitig formschlüssig in die Sicherungsnut (35) greift und hierdurch die Zugstange (8) axial abstützt. Außenseitig ragt der Sicherungsbügel (34) mit einer Lasche aus dem Gehäuse (19) und kann hierüber hin- und herbewegt werden. Hierdurch lässt sich die Zugstange (8) bei Bedarf demontieren. Unterhalb der Drehlagerflächen (37) ist noch ein überstehender Stangenbund vorgesehen, mit dem das Stangenende (11) an der Unterseite des Gehäuses (19) geführt ist.

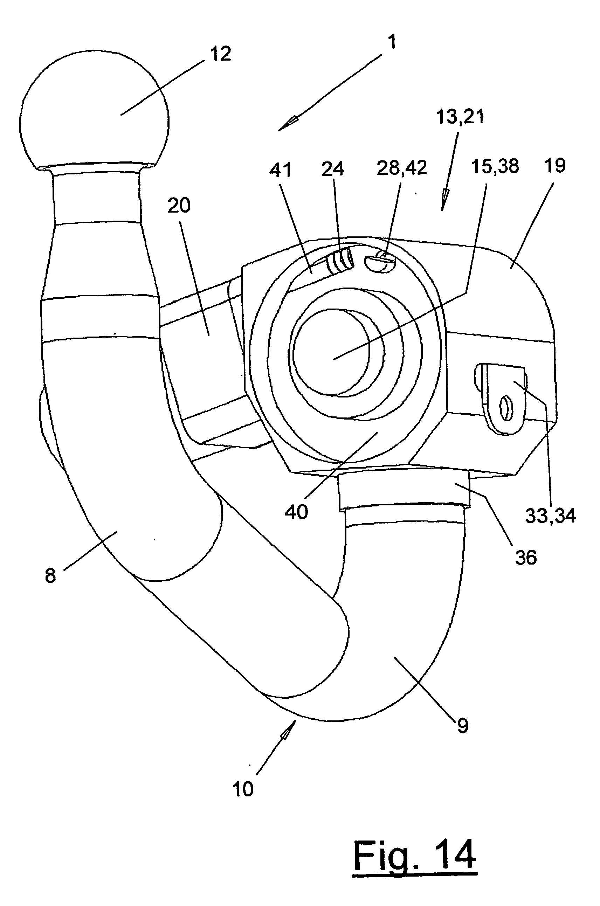

Das Schwenklager (15) des Gehäuses (19) wird durch die vorerwähnten Lagerzapfen (38) im Zusammenspiel mit dem an den Tragplatten (6) angeordneten Lageraugen (39) gebildet. Das Gehäuse (19) hat konzentrisch zu den Lagerzapfen (15) an den beiden Außenseiten eine Ringnut, die ein zusätzliches Führungsteil (40) bildet. An die beidseitigen Ringnuten (40) greifen einerseits der stationäre Zahnkranz (25) mit dem einen Stützring (31) und gegenüberliegend der andere Stützring (32) ein. Am Boden der Ringnut (40) sind auch die vorerwähnten Öffnungen (42) für die . Zahnstangenenden (28), die hierdurch mit den innenseitigen Kurvenbahnen (30) der Stützringe (31,32) in Kontakt treten können. Am Boden der Ringnut (40) befindet sich außerdem eine weitere Öffnung (42) für die Schneckenwelle (24), die hierdurch mit dem stationären Zahnkranz (25) kämmen kann. Figur 14 zeigt diese Gehäuseausbildung.

Aus Figur 14 ist ferner ersichtlich, dass das Gehäuse (19) die innen liegenden Komponenten, wie den Antriebsmotor (20), das Getriebe (21) bzw. die Getriebeteile (22,23) und das Drehlager (17) dicht umschließt und gegen Zutritt von Feuchtigkeit, Staub oder anderen Umwelteinflüssen abdichtet. Hierfür können die Stützringe (31,32) umfangsseitig Nuten zur Aufnahme von Dichtungsringen oder dgl. aufweisen, die auf der Außenseite am Mantel des topfförmigen Führungsteils (40) des Gehäuses (19) anliegen. Hierdurch sind auch die Öffnungen (41,42) abgedichtet.

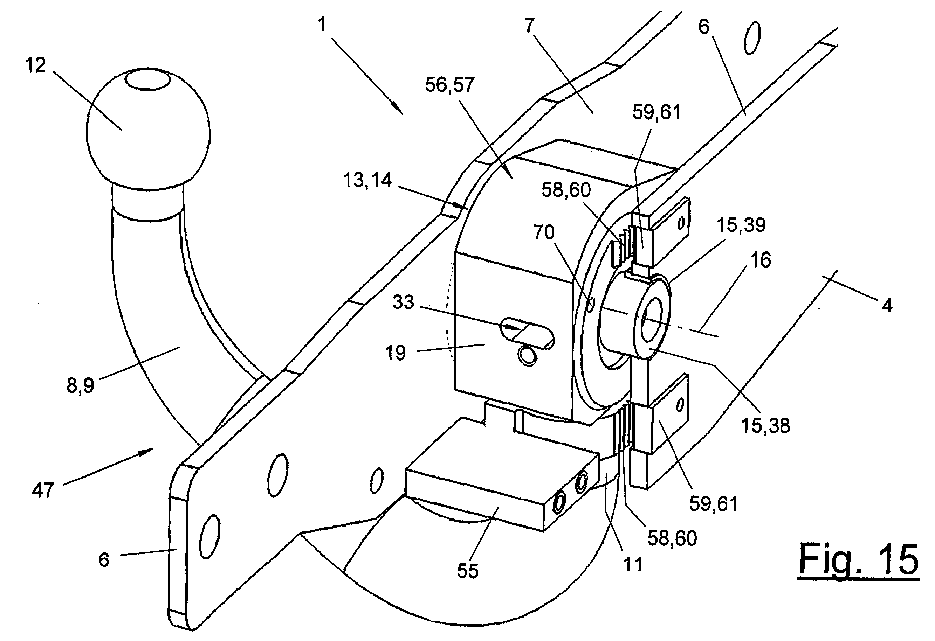

In Figur 15 bis 19 ist eine zweite Variante des Antriebs (13) und des Getriebes (21) dargestellt, wie sie auch Figur 9 bis 11 zeigen.

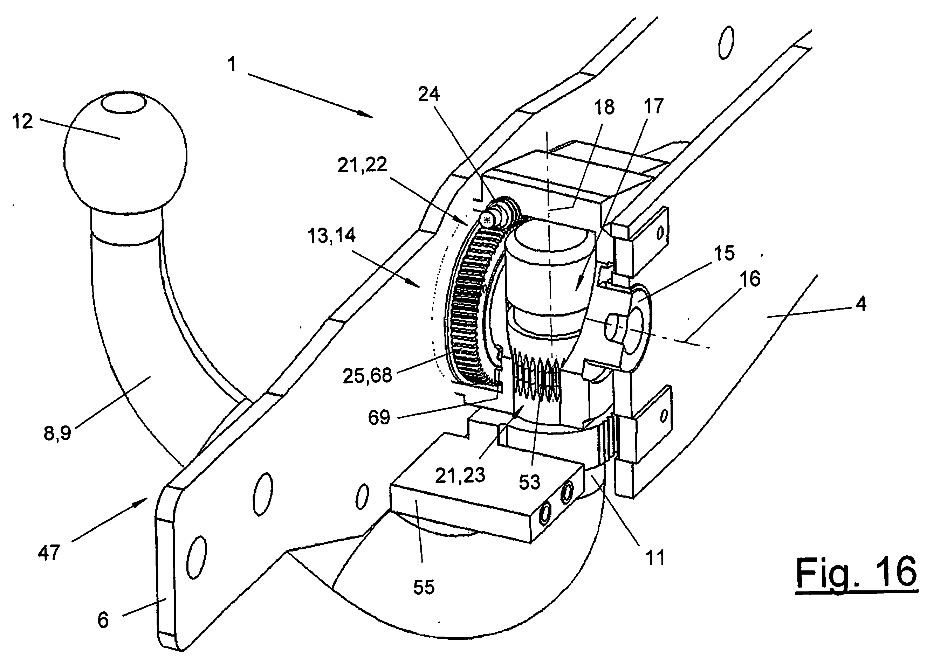

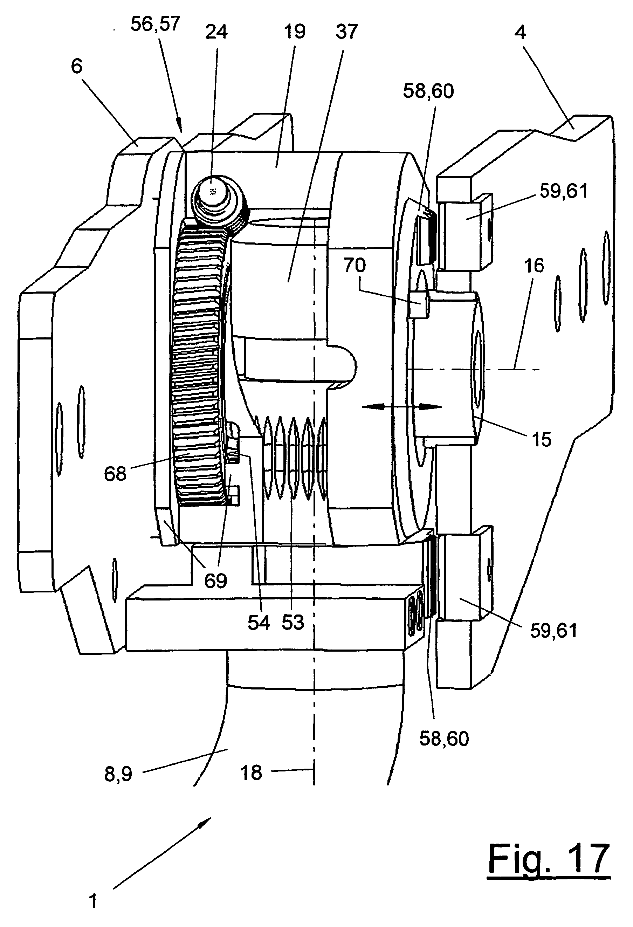

Das relativ ortsfeste Abstützelement (25) ist ein in Figur 16 und 17 dargestelltes Zahnrad (68), vorzugsweise ein Schneckenrad, das auf einem Stützring (31) zeitweise stationär an der benachbarten Tragplatte (6) befestigt ist. Das Zahnrad (68) ist zugleich Bestandteil der Verriegelungsvorrichtung (56). Während der normalen Schwenkbewegungen der Zahnstange (8) zwischen ihren Endstellungen (47,48) ist das Zahnrad (68) stationär und relativ ortsfest auf dem Stützring (31) gelagert und gehalten. Die tangential angestellte Schneckenwelle (24) kämmt mit dem außen verzahnten Zahnrad (68). Durch eine Drehung der Schneckenwelle (24) bewegt sich der Antriebsmotor (20) mit dem angeflanschten Gehäuse (19) in der gewünschten Drehrichtung um die Schwenkachse (16) nach links oder rechts.

Für die Verriegelungsfunktion kann die starre Verbindung zwischen Stützring (31) und Zahnrad (68) gelöst werden, wobei sich das Zahnrad (68) gegenüber dem Stützring (31) dreht und gegebenenfalls auch zusätzlich eine längs der Achse (16) zur Fahrzeugvorderseite gerichtete translatorische Bewegung ausführt. Hierauf wird nachfolgend noch im einzelnen eingegangen.

Im Gehäuse (19) ist das Drehgetriebe (23) angeordnet, welches aus einem am Stangenende (11) umfangseitig angeordneten Zahnkranz (53) und einem zur Schwenkachse (16) konzentrischen Zahnbogen (54) an der Stirnseite des relativ ortsfesten Stützrings (31) besteht. Diese Anordnung ist aus Figur 16 und 17 ersichtlich. Die Drehlagerung des Stangenendes (11) ist die gleiche wie bei der ersten Variante von Figur 12 bis 14, wobei die beiden Drehlagerflächen (37) beidseits des Zahnkranzes (53) angeordnet sind. Das Gehäuse (19) hat im Bereich des Zahnbogens (54) eine kreisbogenförmige Öffnung, durch die der Zahnbogen (54) hindurch greifen und mit dem Zahnkranz (53) kämmen kann.

Wenn das Gehäuse (19) mit der darin gelagerten Zugstange (8) um die Schwenkachse (16) schwenkt, wälzt der Zahnkranz (53) auf dem Zahnbogen (54) ab, wodurch die Zugstange (8) um die Drehachse (18) gedreht wird. Der Zahnbogen (54) und der Zahnkranz (53) können eine hierfür geeignete und auf die gewünschte Überlagerung von Dreh- und Schwenkbewegung abgestimmte Anordnung und Ausbildung der Verzahnung haben. Dies betrifft einerseits die Übersetzung der Verzahnung und andererseits auch die Anordnung und Länge des Zahnbogens (54). Sobald die Zugstange (8) in den Freiraum (7) des Querträgers (4) eintaucht, kommt der Zahnkranz (53) außer Eingriff mit dem Zahnbogen (54), so dass die Drehbewegung beendet ist und die Zugstange (8) nur noch um die Schwenkachse (16) in die Ruhestellung (48) verschwenkt wird. Dementsprechend ist die Winkellage des Zahnbogens (54) relativ zur Schwenkachse (16) gewählt. Beim Ausfahren der Zugstange (8) aus der Ruhestellung (48) in die Betriebsstellung (47) finden die vorbeschriebenen Bewegungen in umgekehrter Reihenfolge statt.

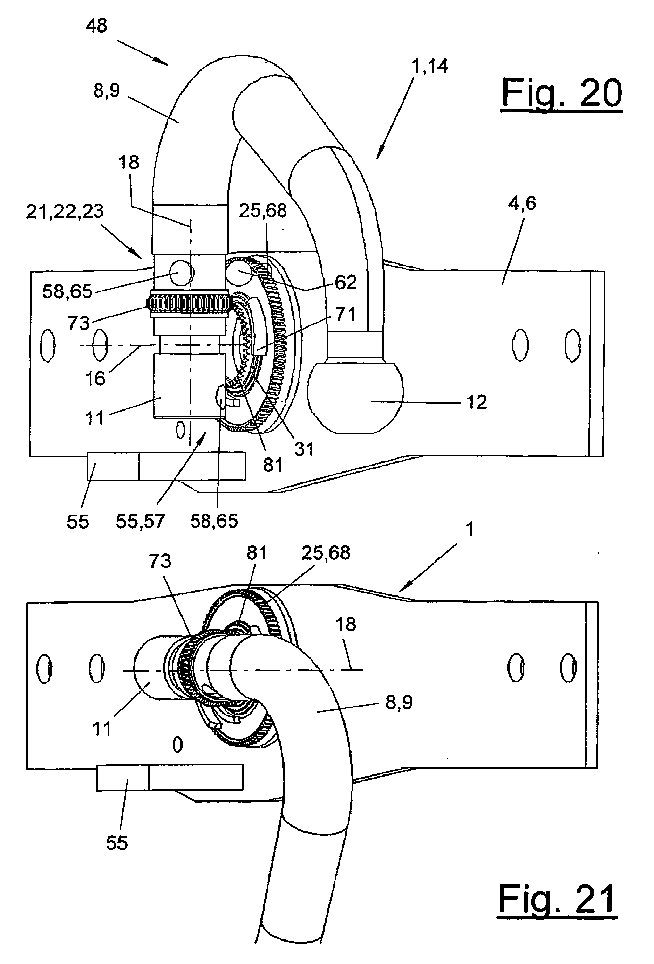

Figur 20 bis 29 zeigen die dritte Variante des Antriebs (13) und des Getriebes (21).

Bei dieser dritten Variante ist ein ständiger Verzahnungseingriff beim Drehgetriebe (23) gegeben. Das Schwenkgetriebe (22) mit dem relativ ortsfesten Abstützelement (25) bzw. dem Zahnrad (68) entspricht der Ausführung der vorbeschriebenen zweiten Variante von Figur 15 bis 19. In Figur 20 bis 23 sind daher der Übersicht halber das Gehäuse (19) und der Antrieb (13) nicht dargestellt. Die Gehäusegestaltung ist in Figur 27 bis 29 gezeigt.

Das Drehgetriebe (23) wird bei der dritten Variante von einem am trägerfesten Stützring (31) stirnseitig angebrachten ringförmigen Zahnkranz (81) und einem Zahnring (73) auf dem Stangenende (11) gebildet. Der Zahnring (73) ist auf dem Stangenende (11) um die Drehachse (18) drehbar gelagert und in Axialrichtung geführt. Die Drehbewegung wird gesteuert durch ein Arretierelement (74), welches vorzugsweise als Kugel ausgebildet ist, die in einem Kugelnest (75) am Zahnring (73) aufgenommen ist. Die Kugel (74) kann dadurch nur radiale Verschiebebewegungen bezüglich der Drehachse (18) ausführen. Die Kugel (74) wirkt mit einer Rastöffnung (76) am Stangenende (11) zusammen, welche im Eingriff mit der Kugel (74) die Drehbewegung des Zahnrings (73) sperrt und eine drehschlüssige Verbindung zwischen der Zugstange (8) und dem Zahnring (73) herstellt. Die Winkellage der Rastöffnung (76) gegenüber der Drehachse (18) bzw. der Mittelebene der gebogenen Zugstange (8) ist so gewählt, dass der Drehschluss beim Ausschwenken der Zugstange (8) nach ca. 90° Schwenkbewegung und in einer Betriebsstellung gemäß Figur 3, 10 und 21 erfolgt.

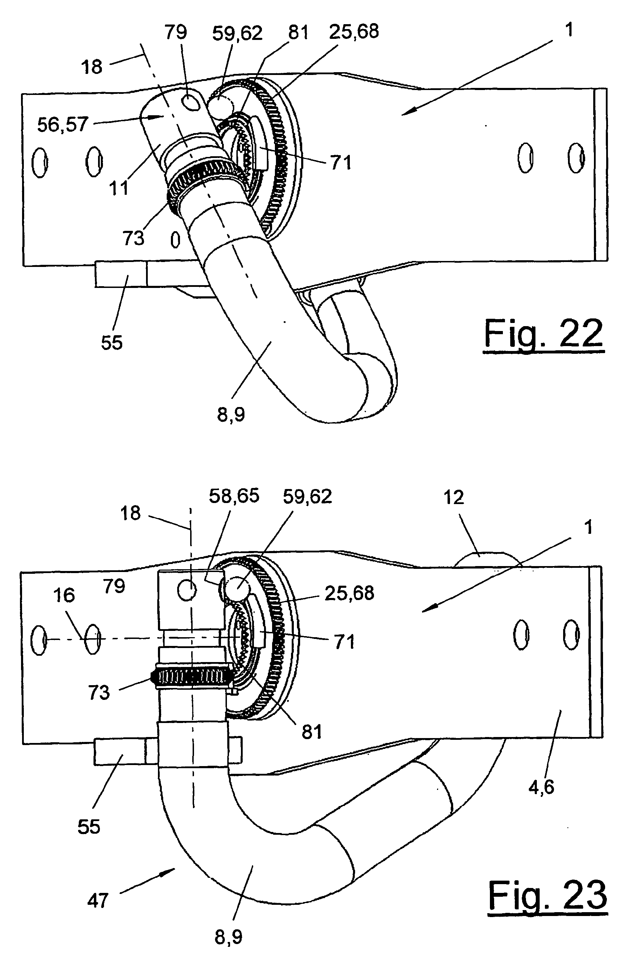

Wenn aus der Ruhestellung (48) von Figur 20 das Gehäuse (19) seine Schwenkbewegung beginnt und die Zugstange (8) mitnimmt, wälzt der Zahnring (73) auf dem Zahnkranz (81) ab und dreht sich dabei ohne nennenswerten Widerstand auf dem Stangenende (11) um die Drehachse (18). Dadurch findet keine drehende Kraftübertragung statt und die Zugstange (8) behält zunächst ihre parallel zum Querträger (4) ausgerichtete Lage. Nach ca. 90° Schwenkbewegung tritt der vorerwähnte Drehschluss ein, wobei der Zahnring (73) seine abwälzende Drehbewegung nun über die Kugel (74) auf die Zahnstange (8) überträgt und diese um die Achse (18) dreht. Figur 22 und 23 zeigen diese Betriebsstellungen. Ab dem Drehschluss überlagern sich die Schwenk- und Drehbewegung der Zugstange (8), wobei der Drehschluss bis in die ausgefahrene Betriebsstellung (47) erhalten bleibt. In der Betriebsstellung (47) können zusätzliche Verriegelungselemente an der Zugstange (8), z.B. an der Oberseite des Stangenendes (11) eingreifen und für eine drehsichere Fixierung sorgen. Eine solche Fixierung kann auch die nachfolgend beschriebene Verriegelungsvorrichtung (56) bewirken.

Zum Einschwenken werden zunächst die zusätzlichen Verriegelungselemente gelöst. Durch den bestehenden Drehschluss am Zahnring (73) dreht sich die Zugstange (8) bei der Schwenkbewegung des Gehäuses (19) mit, bis ein ortsfester Anschlag an der Stangenlagerung (nicht dargestellt) erreicht ist. Durch diesen Anschlagwiderstand wird die Kugel (74) aus der Rastöffnung (76) gezwungen, wodurch der Drehschluss aufgehoben wird und der Zahnring (73) sich frei gegenüber dem Stangenende (11) drehen kann. Die Zugstange (8) behält dann ihre Drehstellung für den restlichen Schwenkweg bis zum Erreichen der Ruhestellung (48) gemäß Figur 20.

Die Rastöffnung (76) kann abgeflachte Öffnungsflanken (77) aufweisen, um den Ein- und Austritt der Kugel (74) zu erleichtern. Figur 26 zeigt diese Anordnung. Im Gehäuse (19) ist eine dem Zahnring (73) umschließende ringförmige Ausnehmung vorhanden, die eine Stufe oder einen Anschlag besitzen kann, der in der Drehschlussstellung zusätzlich die Kugel (74) in die Rastöffnung (76) zwingt und im weiteren Verlauf der Schwenk- und Drehbewegung dort hält. Das Stangenende (11) kann im Bereich des Zahnrings (73) eine Ringnut aufweisen, mit der die Baugröße und der Durchmesser der Anordnung verringert werden können. Auf die Ringnut kann auch verzichtet werden.

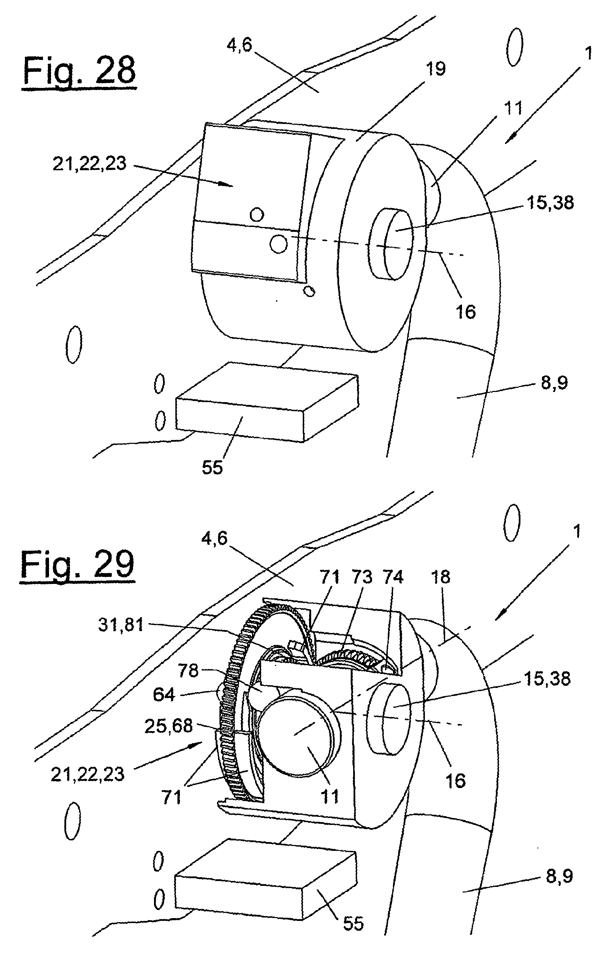

Figur 27 zeigt das Gehäuse (19), welches bei der dritten Variante etwas anders gestaltet ist als in den anderen Ausführungsbeispielen. Figur 28 und 29 zeigen die Zusammenbausituation ohne Motor (20). Das Gehäuse (19) besitzt am Boden seines Führungsteils (40), welches für die innenseitige Führung des Zahnrads (68) vorgesehen ist, eine Öffnung (82) für den innen liegenden Zahnring (73), die den Durchgriff zur Verbindung mit dem außenseitigen Zahnkranz (81) ermöglicht, welcher bei der Ansicht von Figur 27 in Blickrichtung vor dem Führungsteil (40) liegt. Das Gehäuse (19) besitzt ferner am Führungsteil (40) zwei oder mehr Öffnungen (83) für die nachfolgend näher erläuterten Sperrkugeln (78). Der Lagerzapfen (38) greift durch den stationären Stützring (31), der zugleich das Lagerauge bildet. Auf der anderen Seite ist der andere Lagerzapfen (38) direkt im Querträger (4) gelagert.

Zur Sicherung der Zugstange (8) in mindestens einer ihrer Endstellungen, vorzugsweise zumindest der Betriebsstellung (47), ist mindestens eine Verriegelungsvorrichtung (56) vorhanden. Diese besitzt eine Übertragungsvorrichtung (57) zum Umsetzen der drehenden Antriebsbewegung in eine translatorische Verriegelungsbewegung für die Betätigung von formschlüssigen Riegelelementen (58,59), die an der Zugstange (8) und gegebenenfalls auch am Gehäuse (19) angreifen.

In Figur 15 bis 19 und 20 bis 29 sind zwei Ausführungsformen der Verriegelungsvorrichtung (56) und der Übertragungsvorrichtung (57) für die Betriebsstellung (47) dargestellt, die für die erste und zweite Variante des Antriebs (13) und des Getriebes (21) verwendbar sind.

In beiden Fällen wird für die Verriegelung die zunächst starre Verbindung zwischen dem Zahnrad (68) und dem Stützring (31) gelöst, wodurch das Zahnrad (68) sich selbst um die Schwenkachse (16) drehen kann. Diese Drehbewegung wird zur Erzeugung der translatorischen Verriegelungsbewegung benutzt. Die Lagerung oder temporäre Befestigung des Zahnrads (68) auf dem Stützring (31) ist größer als die Widerstände, die den Schwenkbewegungen der Zugstange (8) entgegen stehen, so dass das Zahnrad (68) sich während dieser Schwenkbewegungen in einer Anschlaglage fest sitzt, die erst gelöst werden kann, wenn die Zugstange (8) oder gegebenenfalls auch das Gehäuse (19) gegen den Anschlag (55) in der Endstellung anläuft.

In der Variante von Figur 15 bis 19 sind die Riegelelemente (58,59) als Zahnleisten (60,61) ausgebildet und auf der zur Fahrzeugvorderfront weisenden Querträgerseite angeordnet. Die Zahnleisten (60,61) werden durch eine translatorische Verschiebebewegung der Zugstange (8) und des Gehäuses (19) gegenseitig in formschlüssigen Eingriff gebracht. Hierbei sind sowohl am Gehäuse (19), wie auch am Stangenbund (36) horizontal sich erstreckende Zahnleisten (60) vorhanden, die mit entsprechenden Gegenzahnleisten (61) an der benachbarten Tragplatte (6) in Eingriff treten. Die Zahnleisten (60,61) haben mehrere Zähne mit einem vorzugsweise trapezförmigen Querschnitt, die durch große Tragflächen die Abstützung von hohen auf die Zugstange (8), insbesondere den Kugelkopf (12), einwirkenden Querkräften erlauben. In den Zeichnungen ist die Verriegelungsvorrichtung (56) jeweils in der Ausgangsposition zu Beginn der Verriegelungsbewegung dargestellt, in der die Riegelelemente (58,59) distanziert sind und noch nicht ineinander greifen.

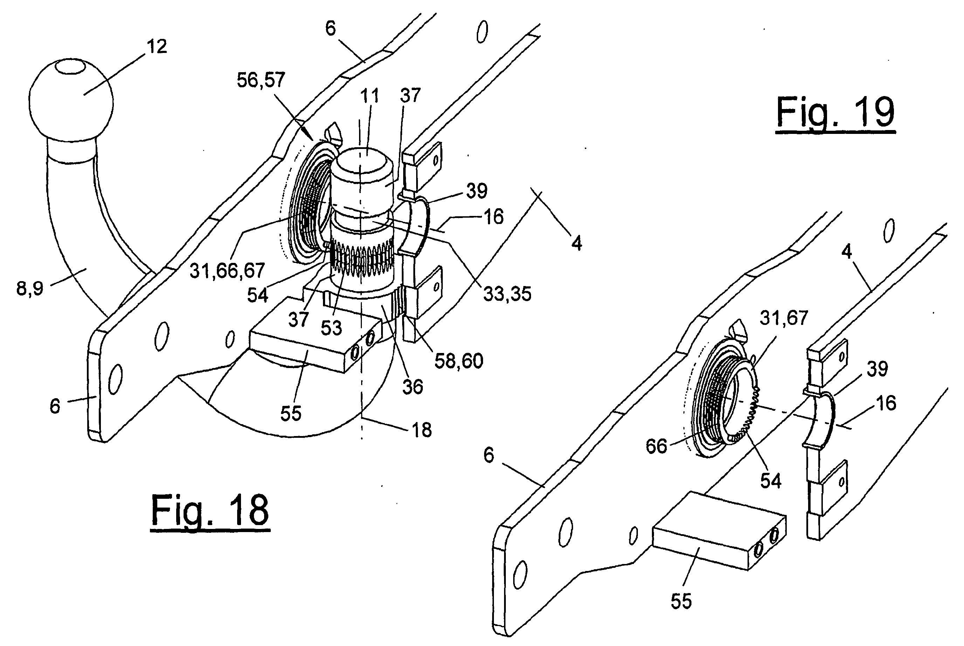

Zur Erzeugung der translatorischen Verschiebebewegung der Zugstange (8) ist der Stützring (31) als Gewindehülse (67) mit einem außenseitigen Bewegungsgewinde (66) ausgebildet. Figur 18 und 19 zeigen diese Anordnung. Das Zahnrad (68) hat ein entsprechendes Innengewinde. Die Hemmung des Bewegungsgewindes (66) ist größer als die Widerstände bei den Schwenkbewegungen der Zugstange (8). Sobald jedoch die Anschlagstellung von Figur 16 erreicht ist, kann die weiterdrehende Schneckenwelle (24) das Zahnrad (68) auf dem Bewegungsgewinde (66) drehen.

Das Zahnrad (68) ist zumindest teilweise vom Gehäuse (19) umgeben und ist dort beidseits über entsprechende Führungsmittel (69) geführt. Das Zahnrad (68) kann sich hierdurch bei seiner Schraubenbewegung gegenüber dem in Anschlagstellung schwenkfesten Gehäuse (19) drehen, wobei es das Gehäuse (19) über die Führungen (69) bei seiner translatorischen Verschiebebewegung mitnimmt. Durch die Schiebelagerung des Schwenklagers (15) kann hierbei das Gehäuse (19) mitsamt der Zugstange (8) entlang der Schwenkachse (16) zur gegenüber liegenden Tragplatte (6) verschoben werden, wodurch die dort angeordneten Riegelelemente (58,59) in Eingriff treten. In der Riegelstellung kann der Antriebsmotor (20) auf geeignete Weise abgeschaltet werden, z.B. über Endschalter oder einer Motorstrommessung.

Das Gehäuse (19) kann ein oder mehrere Drehsicherungen aufweisen. Beispielsweise ist ein neben den Zahnleisten (60) angeordneter und parallel zur Achse (16) ausgerichteter Sperrstift (70) vorhanden, der beim Verriegeln in eine entsprechende Aufnahmeöffnung an der Tragplatte (6) greift. Wenn zum Einschwenken der Zugstange (8) in die Ruhestellung (48) die Verriegelung in der Betriebsstellung (47) wieder gelöst werden soll, verhindert die Drehsperre (70) ein Drehen des Gehäuses (19) um die Schwenkachse (16), so dass der Antriebsmotor (20) zunächst mittels der Schneckenwelle (24) das Zahnrad (68) in Gegenrichtung·zurück in die Anschlagstellung dreht und zugleich das Gehäuse (19) mit der Zugstange (8) aus der Verriegelungsstellung verschiebt. Der Sperrstift (70) ist hierbei länger als die Zahnhöhe der Zahnleisten (60,61) und wirkt auch noch als Drehsperre nach Lösen des Verzahnungseingriffs. Zusätzlich kann auch ein weiteres Sperrelement, z.B. eine federbelastete Kugelraste oder dergleichen zwischen dem Gehäuse (19) und der verriegelungseitigen Tragplatte (6) vorhanden sein. Erst wenn das Zahnrad (68) am Ende des Bewegungsgewindes (66) in Anschlagstellung kommt und nicht mehr weiter drehen kann, lässt sich die Drehsperre lösen und das Gehäuse (19) zum Einschwenken der Zugstange (8) um die Schwenkachse (16) drehen.

Bei der Rückfahrbewegung wird auch der Verzahnungseingriff für das Drehgetriebe (23) wieder geschlossen. Der translatorische Verriegelungshub kann z.B. ca. 4 mm betragen.

In einer anderen Variante von Figur 20 bis 29 sind die Riegelelemente (58,59) als Sperrkugel (62,63,64) ausgebildet, wobei ihre translatorische Verriegelungsbewegung durch konzentrisch gebogene Kulissenführungen (71) am Zahnrad (68) bewirkt wird, welche in Drehrichtung schräg nach außen ansteigende Führungsflächen zum Verdrängen der Sperrkugeln (62,63,64) aufweisen. Das Zahnrad (68) braucht in diesem Fall keine eigene translatorische Verschiebebewegung auszuführen. Es ist daher vorzugsweise nur drehbar und verschiebefest auf dem an der Tragplatte (6) befestigten Stützring (31) gelagert.

Am Stangenende (11) sind ein oder mehrere Kugelaufnahmen (65) angeordnet, in die die jeweils zugehörige Sperrkugel (62,63) eintauchen kann. Die Kugelaufnahmen (65) sind im Querschnitt kreisrund und bieten eine Seitenführung für die Sperrkugeln (62,63). Sie sind außerdem bezüglich der Drehachse (18) in unterschiedlichen Winkelstellungen und zudem in unterschiedlichen axialen Höhenlagen am Stangenende (11) angeordnet. Figur 26 zeigt diese Anordnung mit unterschiedlichen Strichstärken für die sichtbare und die verborgene Seite. Durch diese Gestaltung können die im Gehäuse (19) an den Öffnungen (83) geführten Sperrkugeln (62,63) erst in der Anschlagstellung der Kugelstange (8) am Anschlag (55) in die Kugelaufnahmen (65) gelangen. Während der Schwenkbewegungen der Zugstange (8) wälzen die Sperrkugeln (62,63) hingegen am Außenumfang des Stangenendes (11) bzw. der Drehlagerfläche (37) ab und sind in ihren Führungen am Gehäuse (19) (nicht dargestellt) zurückgedrängt und eingetaucht. Hierdurch wirken die Sperrkugeln (62,63) zugleich auch als Drehsperre für das Zahnrad (68). Die zurückgezogenen Sperrkugeln (62,63) können nicht auf den Kulissenführungen (71) aufgleiten und sperren somit deren Drehbewegung um die Achse (16).

Erst wenn die vorerwähnte Anschlagstellung der Zugstange (8) in der Betriebsstellung (47) erreicht ist, kann das Zahnrad (68) drehen und über die Kulissenführungen (71) die Sperrkugeln (62,63) aus ihrer zurückgezogenen Stellung verdrängen und in die Kugelaufnahmen (65) schieben. Hierbei können auf der anderen Zahnradseite über dortige Kulissenführungen (71) auch zusätzliche Sperrkugeln (64) in entsprechende Kugelaufnahmen (nicht dargestellt) am Gehäuse (19) oder an der benachbarten Tragplatte (6) geschoben werden und eine zusätzliche formschlüssige Verriegelung bewirken.

Zum Lösen der Verriegelungsvorrichtung (56) wird das Zahnrad (68) über den Antriebsmotor (20) rückwärts bewegt, bis ein nicht dargestellter Anschlag erreicht ist und die Kulissenführungen die Sperrkugeln (62,63,64) wieder freigeben. Der Drehwinkel des Zahnrads (68) ist hierfür entsprechend begrenzt. In seiner Anschlagstellung wirkt das Zahnrad (68) wieder als Abstützelement (25), so dass die weitere Antriebsbewegung eine Drehung des Gehäuses (19) um die Schwenkachse (16) zum Einschwenken der Kugelstange (8) bewirkt.

Im dritten Ausführungsbeispiel von Figur 20 bis 29 ist die Verriegelungsvorrichtung (56) auch in der Lage, die Zugstange (8) in der eingefahrenen Ruhestellung (48) zu verriegeln. Dies geschieht ebenfalls mittels eines Sperrelements (78), vorzugsweise einer Sperrkugel, die in einer Öffnung (83) des Gehäuses (19) querbeweglich geführt ist. Die Sperrkugel (78) greift in der Ruhestellung (48) formschlüssig in eine Rastöffnung (79) an der Zugstange (8), insbesondere am Stangenende (11). Der Sperrkugeleingriff wird bewirkt durch eine Kulissenführung (80) am Zahnrad (68), die durch eine Zahnraddrehung betätigt wird und die Sperrkugel (78) in die Rastöffnung (79) schiebt. Die Zahnraddrehung wird ähnlich wie bei der Verriegelung in der Betriebsstellung (47) durch ein Weiterlaufen des Antriebsmotors (20) und der Schneckenwelle (24) erreicht, wenn die Zugstange (8) in der Ruhestellung an den in Figur 11 gezeigten Anschlag (72) anläuft. Die Rastöffnung (79) kann etwas Übermaß haben, so dass die Verriegelung mit geringfügigem Spiel erfolgt.

Die Sperrkugel (78) kann eine Doppelfunktion haben und in der Betriebsstellung (47) mit der Kugelaufnahme (65) in Eingriff treten, welche mit Winkelversatz auf gleicher Höhe mit der Rastöffnung (79) liegt.

Die Anhängevorrichtung (19) kann alternativ oder zusätzlich zur elektrischen Steckdose (43) einen mit der Zugstange (8) verbundenen Stromübertrager (84) aufweisen, der in Figur 26 schematisch dargestellt ist. Der Stromübertrager (84) leitet Leistungs- und Signalströme vom Zugfahrzeug über die Anhängevorrichtung (1) über die aufgesetzte Anhängerkupplung (89) zum Anhänger. Hierbei ist in oder an der Zugstange (8) mindestens eine Leitung (87) für Leistungs- und Signalströme verlegt, die auf der Zugfahrzeugseite an eine Spannungsversorgung und einen Decoder (85) angeschlossen ist. Die Stromübertragung erfolgt bei aufgesetzter Anhängerkupplung (89) durch zwei oder mehr Kontakte (88,89) im Kugelkopf (12) und in der Kupplungspfanne. Die Kontakte (88,89) können gefedert sein, um einen sicheren Kontakt unter allen Betriebsbedingungen herzustellen. Der anhängerseitige Kontakt (89) ist ebenfalls über eine Leitung (87) mit den Stromverbrauchern des Anhängers z.B. der Anhängerbeleuchtung, den Blinkern oder dergleichen verbunden.

Die Signalleitung ist anhängerseitig an einen Encoder (86) angeschlossen. Über den Encoder (86) werden relevante Informationen, z.B. die Funktion der Beleuchtung, eines Blinkers oder dergleichen in entsprechende Signale umgewandelt, die entweder auf separatem Wege oder in Überlagerung der Leistungsströme dem Decoder (85) zugeführt werden, wo sie entschlüsselt und zur weiteren Verwertung, z.B. Ausgabe einer Alarmmeldung oder dgl. an das Zugfahrzeug weitergeleitet werden.

Abwandlungen der gezeigten Ausführungsformen sind in verschiedener Weise möglich.
Die Einrichtung (14) zur Erzeugung der überlagerten Rotationsbewegung der Zugstange (8) kann zwei Antriebsmotoren mit gemeinsamer Steuerung besitzen, die jeweils eigenständig und direkt auf die rotatorischen Achsen (16,18) einwirken und zur Erzeugung der überlagerten Rotationsbewegung entsprechend gegenseitig gesteuert sind. Ferner kann die Anhängevorrichtung (1) noch weitere translatorische und/oder rotatorische zusätzliche Achsen haben. Der mechanische Antrieb (13) kann ferner statt eines Antriebsmotors (20) ein oder mehrere manuell bedienbare Antriebsteile, z.B. einen Kurbeltrieb aufweisen.

Das Getriebe (21) kann in mannigfaltig anderer Weise ausgebildet sein. Statt normaler Zahnradverbindungen können auch andere geeignete und vorzugsweise formschlüssige Verbindungen eingesetzt werden. Hierbei ist es ferner möglich, relativ stationäre Abstützelemente am Querträger (4) vorzusehen, die mit einem entsprechenden Antriebsrad am Stangenende (11) auf direktem Wege kämmend verbunden sind, so dass die Schwenkbewegung des Gehäuses direkt auf die Zugstangendrehung übertragen wird. Durch Wahl der Eingriffe und insbesondere der Übersetzungen bestehen hierbei ebenfalls Variations- und Anpassungsmöglichkeiten. Ferner ist es möglich, die Ableitung der rotatorischen Bewegungen umzukehren und den Antriebsmotor der Drehachse (18) zuzuordnen, wobei von der Drehbewegung dann die Schwenkbewegung des Gehäuses (19) und der Zugstange (8) abgeleitet wird. Variabel sind ferner die Ausgestaltungen der Lager, die Zuordnungen und Ausrichtungen der rotatorischen Achsen. Auch die sonstigen Teile der Anhängevorrichtung (1), insbesondere die Form der Zugstange (8) kann in beliebig geeigneter Weise abgewandelt werden.

Zudem sind Abwandlungen der Verriegelungsvorrichtung (56) in verschiedener Weise möglich. Anstelle der Zahnleisten (60,61) können beliebige andere geeignete formschlüssige Riegelelemente (58,59) verwendet werden, z.B. Stifte oder Passfedern, die bei translatorischen Verschiebebewegung des Gehäuses (19) und der Zugstange (8) ineinander greifen. Abwandlungen sind auch hinsichtlich des zweiten Ausführungsbeispiels mit den Sperrkugeln möglich. Anstelle der Sperrkugeln können auch Rollen oder dergleichen andere geeignete Riegelelemente über die Drehbewegung des Zahnrads (68) in eine translatorische Verriegelungsbewegung versetzt werden.

### BEZUGSZEICHENLISTE

- 1: Anhängevorrichtung
- 2: Zugfahrzeug
- 3: Heckteil, Heckschürze
- 4: Querträger
- 5: Tragrohr
- 6: Tragplatte
- 7: Freiraum
- 8: Zugstange
- 9: Stangenhals
- 10: Krümmung
- 11: Stangenende
- 12: Zugkopf, Kugelkopf
- 13: Antrieb
- 14: Einrichtung für überlagerte Rotationsbewegung
- 15: Schwenklager
- 16: Schwenkachse
- 17: Drehlager
- 18: Drehachse
- 19: Gehäuse
- 20: Antriebsmotor
- 21: Getriebe
- 22: Getriebeteil, Schwenkgetriebe
- 23: Getriebeteil, Drehgetriebe
- 24: Antriebselement, Schneckenwelle
- 25: Abstützelement, Zahnkranz relativ ortsfest
- 26: Zahnstange querbeweglich
- 27: Führung, Abflachung
- 28: Zahnstangenende
- 29: Zahnrad an Zugstange
- 30: Kurvenbahn, Kulissenbahn
- 31: Stützring
- 32: Stützring
- 33: Axialsicherung
- 34: Sicherungsbügel
- 35: Sicherungsnut
- 36: Stangenbund
- 37: Drehlagerfläche Zugstange
- 38: Schenklagerteil, Lagerzapfen Gehäuse
- 39: Schenklagerteil, Lagerauge Querträger
- 40: Führungsteil Gehäuse
- 41: Öffnung für Schneckenwelle
- 42: Öffnung für Zahnstange
- 43: Steckdose
- 44: Steckdosenhalter
- 45: Zahnrad
- 46: Achse
- 47: Betriebsstellung
- 48: Ruhestellung
- 49: stationärer Zahnkranz
- 50: manuelles Antriebsteil, Kurbeltrieb
- 51: Dichtung
- 52: Hecköffnung
- 53: Zahnkranz am Stangenende
- 54: Zahnbogen
- 55: Anschlag für Zugstange
- 56: Verriegelungsvorrichtung
- 57: Übertragungsvorrichtung
- 58: Riegelelement
- 59: Riegelelement
- 60: Zahnleiste
- 61: Zahnleiste
- 62: Sperrkugel
- 63: Sperrkugel
- 64: Sperrkugel
- 65: Kugelaufnahme
- 66: Bewegungsgewinde
- 67: Gewindehülse
- 68: Zahnrad, Schneckenrad
- 69: Führung für Zahnrad
- 70: Drehsperre, Sperrstift
- 71: Kulissenführung
- 72: Anschlag für Kugelkopf
- 73: Zahnring
- 74: Arretierelement, Kugel
- 75: Kugelnest am Zahnring
- 76: Rastöffnung an Zugstange
- 77: Öffnungsflanke
- 78: Sperrelement, Sperrkugel
- 79: Rastöffnung an Zugstange
- 80: Kulissenführung für Sperrkugel
- 81: Zahnkranz
- 82: Öffnung für Zahnring
- 83: Öffnung für Kugel
- 84: Stromübertrager
- 85: Decoder
- 86: Encoder
- 87: Leitung
- 88: Kontakt
- 89: Kontakt
- 90: Anhängerkupplung

## Patentansprüche

1. Anhängevorrichtung für Zugfahrzeuge, bestehend aus einer Zugstange (8), die um zumindest zwei rotatorischen Achsen (16,18) beweglich gelagert ist und aus mindestens einem mechanischen Antrieb (13) zur Bewegung der Zugstange (8) zwischen einer Betriebsstellung (47) und einer Ruhestellung (48), **dadurch gekennzeichnet, dass** der Antrieb (13) eine Einrichtung (14) zur Erzeugung einer zumindest bereichsweise überlagerten Rotationsbewegung der Zugstange (8) um beide Achsen (16,18) aufweist.

2. Anhängevorrichtung nach Anspruch 1, **dadurch gekennzeichnet, dass** die rotatorischen Achsen (16,18) im rechten Winkel zueinander ausgerichtet sind, wobei die Zugstange (8) eine kardanische Lagerung mit einem Schwenklager (15) und einem Drehlager (17) mit sich kreuzenden rotatorischen Achsen (16,18) aufweist.

3. Anhängevorrichtung nach Anspruch 1 oder 2, **dadurch gekennzeichnet, dass** der mechanische Antrieb (13) einen vorzugsweise elektrischen Antriebsmotor (20) oder ein manuell bedienbares Antriebsteil, vorzugsweise einen Kurbeltrieb (50) aufweist.

4. Anhängevorrichtung nach einem der vorhergehenden Ansprüche, **dadurch gekennzeichnet, dass** die Zugstange (8) eine gekrümmte Form aufweist und mit ihrem einen Stangenende (11) um eine in Betriebsstellung (47) im wesentlichen vertikale Drehachse (18) und um eine im wesentlichen in Fahrzeuglängsrichtung liegende Schwenkachse (16) rotierbar gelagert ist, wobei die Zugstange (8) um die Drehachse (18) einen Drehwinkel von im wesentlichen 90° und um die Schwenkachse (16) einen Drehwinkel von ca. 90° oder mehr, vorzugsweise ca. 180°-190° aufweist.

5. Anhängevorrichtung nach einem der vorhergehenden Ansprüche, **dadurch gekennzeichnet, dass** die Zugstange (8) an einem Querträger (4) für das Zugfahrzeug (2) in einem Freiraum (7) des Querträgers (4) gelagert ist, wobei die Zugstange (8) in Ruhestellung (48) längs des Querträgers (4) ausgerichtet ist und im Freiraum des Querträgers (4) eintaucht, wobei die Zugstange (8) mit ihrer Krümmung (10) nach oben weist.

6. Anhängevorrichtung nach einem der vorhergehenden Ansprüche, **dadurch gekennzeichnet, dass** die Anhängevorrichtung (1) eine Dichtung (51) zum Verschluss des Freiraums (7) am Querträger (4) und/oder der Hecköffnung (52) an der Unterseite des Zugfahrzeugs (2) aufweist.

7. Anhängevorrichtung nach einem der vorhergehenden Ansprüche, **dadurch gekennzeichnet, dass** die Zugstange (8) mit ihrer Drehachse (18) und ihrem Drehlager (17) in einem Gehäuse (19) gelagert ist, welches um die Schwenkachse (16) mit dem Schwenklager (15) rotierbar am Querträger (4) gelagert ist.

8. Anhängevorrichtung nach einem der vorhergehenden Ansprüche, **dadurch gekennzeichnet, dass** die Einrichtung zur Erzeugung (14) der überlagerten Rotationsbewegung als ein die Schwenkachse (16) und die Drehachse (18) koppelndes Getriebe (21) ausgebildet ist.

9. Anhängevorrichtung nach einem der vorhergehenden Ansprüche, **dadurch gekennzeichnet, dass** das Getriebe (21) mehrere gekoppelte Getriebeteile (22,23) und einen gemeinsamen Antriebsmotor (20) aufweist, wobei die Drehbewegung der Zugstange (8) um die Drehachse (18) von der Schwenkbewegung der Zugstange (8) oder des Gehäuses (19) abgeleitet ist

10. Anhängevorrichtung nach einem der vorhergehenden Ansprüche, **dadurch gekennzeichnet, dass** der Antriebsmotor (20) mitbewegt und am Gehäuse (19) oder an der Zugstange (8) angeordnet ist, wobei der Antriebsmotor (20) auf ein erstes Getriebeteil (22) einwirkt, welches als Schwenkgetriebe ausgebildet ist und ein mit dem Antriebsmotor (20) verbundenes Antriebselement (24), vorzugsweise eine Schneckenwelle, und ein damit im Eingriff stehendes externes relativ stationäres Abstützelement (25), vorzugsweise ein umfangseitig verzahntes Zahnrad. (68), aufweist.

11. Anhängevorrichtung nach einem der vorhergehenden Ansprüche, **dadurch gekennzeichnet, dass** am oder im Gehäuse (19) ein Getriebe (21) oder Getriebeteil (23) angeordnet ist, welches die Schwenkbewegung des Gehäuses (19) in eine Drehbewegung der Zugstange (8) um die Drehachse (18) umsetzt, wobei das Getriebeteil (23) einen Zahnring (73) aufweist, der mit steuerbarem Drehschluss auf der Zugstange (8) um die Drehachse (18) rotierfähig gelagert ist und der mit einem relativ stationären Zahnkranz (81) kämmt.

12. Anhängevorrichtung nach einem der vorhergehenden Ansprüche, **dadurch gekennzeichnet, dass** der Zahnring (73) ein bewegliches Arretierelement (74) aufweist, welches mit einer Rastöffnung (76) an der Zugstange (8) zur Bildung der drehschlüssigen Verbindung zusammenwirkt.

13. Anhängevorrichtung nach einem der vorhergehenden Ansprüche, **dadurch gekennzeichnet, dass** die Anhängevorrichtung (1) ein oder mehrere Verriegelungsvorrichtungen (56) zur Kontrolle und Fixierung mindestens einer Endlage der Zugstange (8) in der Betriebs- und/oder Ruhestellung (47,48) aufweist.

14. Anhängevorrichtung nach einem der vorhergehenden Ansprüche, **dadurch gekennzeichnet, dass** die Anhängevorrichtung (1) eine elektrische Steckdose (43) aufweist, die mitbewegbar an der Zugstange (8) oder am Gehäuse (19) angeordnet ist.

15. Anhängevorrichtung nach einem der Ansprüche 1 bis 13, **dadurch gekennzeichnet, dass** die Anhängevorrichtung (1) einen mit der Zugstange (8) verbundenen Stromübertrager (84) mit stromleitenden Kontakten (88,89) zur Verbindung mit einer Anhängerkupplung (90) aufweist.

16. Anhängevorrichtung nach Anspruch 15, **dadurch gekennzeichnet, dass** der Stromübertrager (84) einen Encoder (86) und einen Decoder (85) mit einer Leitungsverbindung (87) aufweist, die dem Anhänger und dem Zugfahrzeug zugeordnet sind.

## Claims

1. Trailer device for traction vehicles, consisting of a drawbar (8), which is mounted movably about at least two axes of rotation (16, 18), and of at least one mechanical drive (13) for the movement of the drawbar (8) between an operating position (47) and a position of rest (48), **characterized in that** the drive (13) has a means (14) for generating a rotational movement of the drawbar (8) about the two axes (16, 18), the said rotational movement being superposed at least in regions.

2. Trailer device according to Claim 1, **characterized in that** the axes of rotation (16, 18) are oriented at right angles to one another, the drawbar (8) having a cardanic mounting with a pivot bearing (15) and with a rotary bearing (17) having intersecting axes of rotation (16, 18).

3. Trailer device according to Claim 1 or 2, **characterized in that** the mechanical drive (13) has a preferably electric drive motor (20) or a manually operable drive part, preferably a crank mechanism (50). '

4. Trailer device according to one of the preceding claims, **characterized in that** the drawbar (8) has a curved shape and is mounted at its one drawbar end (11) rotatably about an axis of rotation (18) which is essentially vertical in the operating position (47) and about a pivot axis (16) lying essentially in the vehicle longitudinal direction, the drawbar (8) having a rotary angle of essentially 90° about the axis of rotation (18) and a rotary angle of approximately 90° or more, preferably approximately 180° - 190°, about the pivot axis (16).

5. Trailer device according to one of the preceding claims, **characterized in that** the drawbar (8) is mounted on a cross member (4) for the traction vehicle (2) in a free space (7) of the cross member (4), in the position of rest (48) the drawbar (8) being oriented along the cross member (4) and penetrating in the free space of the cross member (4), the drawbar (8) facing with its curvature (10) upwards.

6. Trailer device according to one of the preceding claims, **characterized in that** the trailer device (1) has a seal (51) for the closing of the free space (7) on the cross member (4) and/or of the rear opening (52) on the underside of the traction vehicle (2).

7. Trailer device according to one of the preceding claims, **characterized in that** the drawbar (8) is mounted with its axis of rotation (18) and with its rotary bearing (17) in a housing (19) which is mounted on the cross member (4) rotatably about the pivot axis (16) by means of the pivot bearing (15).

8. Trailer device according to one of the preceding claims, **characterized in that** the means (14) for generating the superposed rotational movement is designed as a gear (21) coupling the pivot axis (16) and the axis of rotation (18).

9. Trailer device according to one of the preceding claims, **characterized in that** the gear (21) has a plurality of coupled gear parts (22, 23) and a common drive motor (20), the rotational movement of the drawbar (8) about the axis of rotation (18) being derived from the pivoting movement of the drawbar (8) or of the housing (19).

10. Trailer device according to one of the preceding claims, **characterized in that** the drive motor (20) is co-moved and is arranged on the housing (19) or on the drawbar (8), the drive motor (20) acting on a first gear part (22) which is designed as a pivoting gear and which has a drive element (24), preferably a worm shaft, connected to the drive motor (20) and an external relatively stationary supporting element (25), preferably a circumferential toothed gearwheel (68), which is in engagement with the said drive element.

11. Trailer device according to one of the preceding claims, **characterized in that** on or in the housing (19) is arranged a gear (21) or gear part (23) which converts the pivoting movement of the housing (19) into a rotational movement of the drawbar (8) about the axis of rotation (18), the gear part (23) having a toothed ring (73) which is mounted rotatably about the axis of rotation (18) on the drawbar (8) by means of a controllable rotary fastening and which meshes with a relatively stationery toothed rim (81).

12. Trailer device according to one of the preceding claims, **characterized in that** the toothed ring (73) has a movable detaining element (74) which cooperates with a latching orifice (76) on the drawbar (8) in order to form the rotationally fast connection.

13. Trailer device according to one of the preceding claims, **characterized in that** the trailer device (1) has one or more locking devices (56) for controlling and fixing at least one end position of the drawbar (8) in the operating position and/or position of rest (47, 48).

14. Trailer device according to one of the preceding claims, **characterized in that** the trailer device (1) has an electric plug socket (43) which is arranged co-movably on the drawbar (8) or on the housing (19).

15. Trailer device according to one of Claims 1 to 13, **characterized in that** the trailer device (1) has a current transmitter (84) connected to the drawbar (8) and having current-conducting contacts (88, 89) for connection to a trailer coupling (90).

16. Trailer device according to Claim 15, **characterized in that** the current transmitter (84) has an encoder (86) and a decoder (85) with a line connection (87), which are assigned to the trailer and to the traction vehicle.

## Revendications

1. Dispositif de remorquage pour véhicules de traction, se composant d'une barre de traction (8) qui est montée mobile autour d'au moins deux axes de rotation (16, 18) et d'au moins un entraînement mécanique (13) pour le déplacement de la barre de traction (8) entre une position de service (47) et une position de repos (48), **caractérisé en ce que** l'entraînement (13) présente un dispositif (14) pour produire un mouvement de rotation au moins en partie superposé de la barre de traction (8) autour des deux axes (16, 18).

2. Dispositif de remorquage selon la revendication 1, **caractérisé en ce que** les axes de rotation (16, 18) sont orientés à angle droit l'un par rapport à l'autre, la barre de traction (8) présentant un support de type cardan avec un palier pivotant (15) et un palier rotatif (17) avec des axes de rotation (16, 18) se croisant.

3. Dispositif de remorquage selon la revendication 1 ou 2, **caractérisé en ce que** l'entraînement mécanique (13) présente un moteur d'entraînement (20) de préférence électrique ou une partie d'entraînement pouvant être actionnée manuellement, de préférence un mécanisme d'embiellage (50).

4. Dispositif de remorquage selon l'une quelconque des revendications précédentes, **caractérisé en ce que** la barre de traction (8) présente une forme courbe et est montée avec l'une de ses extrémités de barre (11) à rotation autour d'un axe de rotation (18) essentiellement vertical dans la position de service (47) et autour d'un axe de pivotement (16) essentiellement dans la direction longitudinale du véhicule, la barre de traction (8) présentant autour de l'axe de rotation (18) un angle de rotation d'environ 90° et autour de l'axe de pivotement (16) un angle de rotation d'environ 90° ou plus, de préférence d'environ 180°-190°.

5. Dispositif de remorquage selon l'une quelconque des revendications précédentes, **caractérisé en ce que** la barre de traction (8) est montée sur une traverse (4) pour le véhicule de traction (2) dans un espace libre (7) de la traverse (4), la barre de traction (8) étant orientée dans la position de repos (48) le long de la traverse (4) et plongeant dans l'espace libre de la traverse (4), la barre de traction (8) étant tournée vers le haut avec sa courbure (10).

6. Dispositif de remorquage selon l'une quelconque des revendications précédentes, **caractérisé en ce que** le dispositif de remorquage (1) présente un joint d'étanchéité (51) pour fermer l'espace libre (7) sur la traverse (4) et/ou l'ouverture arrière (52) sur le côté inférieur du véhicule de traction (2).

7. Dispositif de remorquage selon l'une quelconque des revendications précédentes, **caractérisé en ce que** la barre de traction (8) est montée avec son axe de rotation (18) et son palier rotatif (17) dans un boîtier (19) qui est monté sur la traverse (4) de manière à pouvoir tourner autour de l'axe de pivotement (16) avec le palier pivotant (15).

8. Dispositif de remorquage selon l'une quelconque des revendications précédentes, **caractérisé en ce que** le dispositif pour produire (14) le mouvement de rotation superposé est réalisé en tant qu'engrenage (21) accouplant l'axe de pivotement (16) et l'axe de rotation (18).

9. Dispositif de remorquage selon l'une quelconque des revendications précédentes, **caractérisé en ce que** l'engrenage (21) présente plusieurs parties d'engrenage accouplées (22, 23) et un moteur d'entraînement commun (20), le mouvement de rotation de la barre de traction (8) autour de l'axe de rotation (18) étant dérivé du mouvement de pivotement de la barre de traction (8) ou du boîtier (19).

10. Dispositif de remorquage selon l'une quelconque des revendications précédentes, **caractérisé en ce que** le moteur d'entraînement (20) est entraîné en même temps et est disposé sur le boîtier (19) ou sur la barre de traction (8), le moteur d'entraînement (20) agissant sur une première partie d'engrenage (22) qui est réalisée sous forme de mécanisme pivotant et présente un élément d'entraînement (24) connecté au moteur d'entraînement (20), de préférence un arbre de vis sans fin, et un élément de support externe relativement stationnaire (25) en engagement avec lui, de préférence une roue dentée (68) à denture périphérique.

11. Dispositif de remorquage selon l'une quelconque des revendications précédentes, **caractérisé en ce qu'**un engrenage (21) ou une partie d'engrenage (23) est disposé(e) sur ou dans le boîtier (19), lequel ou laquelle convertit le mouvement de pivotement du boîtier (19) en un mouvement de rotation de la barre de traction (8) autour de l'axe de rotation (18), la partie d'engrenage (23) présentant un anneau denté (73) qui est monté avec engagement rotatif commandable sur la barre de traction (8) de manière à pouvoir tourner autour de l'axe de rotation (18) et qui s'engrène avec une couronne dentée (81) relativement stationnaire.

12. Dispositif de remorquage selon l'une quelconque des revendications précédentes, **caractérisé en ce que** l'anneau denté (73) présente un élément de blocage mobile (74) qui coopère avec une ouverture d'encliquetage (76) sur la barre de traction (8) pour former la connexion par engagement rotatif.

13. Dispositif de remorquage selon l'une quelconque des revendications précédentes, **caractérisé en ce que** le dispositif de remorquage (1) présente un ou plusieurs dispositifs de verrouillage (56) pour le contrôle et la fixation d'au moins une position d'extrémité de la barre de traction (8) dans la position de service et/ou de repos (47, 48).

14. Dispositif de remorquage selon l'une quelconque des revendications précédentes, **caractérisé en ce que** le dispositif de remorquage (1) présente une prise électrique (43) qui est disposée de manière à pouvoir être entraînée en même temps sur la barre de traction (8) ou sur le boîtier (19).

15. Dispositif de remorquage selon l'une quelconque des revendications 1 à 13, **caractérisé en ce que** le dispositif de remorquage (1) présente un élément de transmission de courant (84) connecté à la barre de traction (8) avec des contacts conducteurs de courant (88, 89) pour la connexion à un attelage de remorque (90).

16. Dispositif de remorquage selon la revendication 15, **caractérisé en ce que** l'élément de transmission de courant (84) présente un codeur (86) et un décodeur (85) avec une connexion de ligne (87), qui sont associés à la remorque et au véhicule de traction.
